# EUROPEAN PATENT SPECIFICATION

(11) **EP 2 460 766 B1**
(45) Date of publication and mention of the grant of the patent: **30.04.2014**
(21) Application number: 10804318.3
(22) Date of filing: 22.07.2010
(51) Int. Cl.: C01G 23/04, C09D 7/12, C09D 11/10, C09D 127/12, C09C 1/36

(54) **COMPOSITE PARTICLE, COMPOSITION FOR FORMING COATING MEMBRANE, PRINTING INK, COATING MATERIAL COMPOSITION, COATED ARTICLE, AND RESIN FILM WITH ATTACHED COATING MEMBRANE**
VERBUNDPARTIKEL, ZUSAMMENSETZUNG ZUR BILDUNG EINER BESCHICHTUNGSMEMBRAN, DRUCKTINTE, BESCHICHTUNGSMATERIALZUSAMMENSETZUNG, BESCHICHTETER ARTIKEL UND HARZFILM MIT DARAUF ANGEBRACHTER BESCHICHTUNGSMEMBRAN
PARTICULE COMPOSITE, COMPOSITION POUR FORMER UNE MEMBRANE DE REVÊTEMENT, ENCRE D'IMPRESSION, COMPOSITION DE MATIERE DE REVÊTEMENT, ARTICLE REVÊTU, ET FILM DE RESINE A MEMBRANE DE REVÊTEMENT FIXEE

(30) Priority: 27.07.2009 JP 2009174356
(43) Date of publication of application: 06.06.2012
(73) Proprietor: Asahi Glass Company, Limited, Tokyo 100-8405 (JP)
(72) Inventor: ARUGA, Hiroshi, Tokyo 100-8405 (JP)
(74) Representative: Müller-Boré & Partner Patentanwälte PartG mbB
(86) International application number: PCT/JP2010/062364
(87) International publication number: WO 2011/013572

(56) References cited:
- EP-A1- 1 541 638
- WO-A1-2008/078657
- WO-A1-2008/078657
- JP-A- 10 292 056
- JP-A- 2000 212 054
- JP-A- 2001 254 028
- JP-A- 2007 138 053
- JP-T- 2000 506 487
- DATABASE WPI Week 200060 Thomson Scientific, London, GB; AN 2000-621249 XP002687154, -& JP 2000 212054 A 2 August 2000 (2000-08-02)

## Description

### TECHNICAL FIELD

The present invention relates to composite particles containing titanium oxide, a composition for forming a coating layer which contains such composite particles, particularly a printing ink and coating material composition containing such composite particles, and a coated article having a coating layer formed by such a composition for forming a coating layer, particularly a resin film having such a coating layer.

### BACKGROUND ART

A fluororesin film is excellent in weather resistance, soiling resistance, etc. and thus, is used, for example, as a roof material, a wall material, etc. of buildings or structures such as outdoor exhibition facilities, sports facilities, agricultural houses, etc. (buildings or structures which employ a fluororesin film as a roof material, a wall material, etc. will be hereinafter referred to also as "film structures"). However, a fluororesin film has a high visible light transmittance, and therefore, when it is used as a roof material, a wall material, etc., the inside tends to be too bright, or the inside temperature tends to increase too much, and in some cases, it is required to suppress the visible light transmittance.

As a method to suppress the visible light transmittance of a fluororesin film, a method of reflecting the visible light, a method of absorbing the visible light, etc. may be mentioned. Among them, the method of reflecting the visible light is preferred, since by the method of absorbing the visible light, the temperature of the fluororesin film increases, whereby the mechanical strength of the film deteriorates. As a method of reflecting visible light entering into a fluororesin film, a method may, for example, be mentioned wherein a coating layer containing a white pigment such as a titanium oxide pigment having a high refractive index is formed on the resin film by a printing method using a printing ink.

However, a fluororesin film having a coating layer containing a titanium oxide pigment formed on the resin film, has the following problems.
(i) Titanium oxide is likely to undergo discoloration or decomposition by ultraviolet rays. As a result, the fluororesin film is likely to undergo discoloration or a change in the visible light reflectance.
(ii) By photocatalysis of titanium oxide by ultraviolet rays, the fluororesin film and the coating layer are likely to undergo discoloration, or the mechanical strength of the fluororesin film and the coating layer tends to deteriorate. As a result, discoloration, a change in the visible light reflectance or deterioration of the mechanical strength, of the fluororesin film occurs.
(iii) Hydrogen fluoride is formed by decomposition of the fluororesin by the photocatalysis of titanium oxide, and by such hydrogen fluoride, the white pigment as well as other coloring pigments incorporated to the coating layer undergoes color fading. As a result, discoloration or a change in the visible light reflectance of the fluororesin film occurs.

As a pigment to solve the above problem (i), the following pigments have been proposed.
(1) A pigment having cerium oxide and dense amorphous silica precipitated on the surface of rutile-type titanium oxide, wherein the amount of cerium oxide is from 0.01 to 1.0 mass% of titanium oxide, and the amount of the dense amorphous silica is from 1 to 8 mass% of titanium oxide (Patent Document 1).
(2) A pigment made of rutile-type titanium oxide particles having a covering layer made of alumina or alumina/silica, wherein the surface of the particles has cerium cations in an amount of from 0.5 to 2 mass% of titanium oxide and a stoichiometric amount of sulfate anions, phosphate anions or silicate anions bonded thereto (Patent Document 2).

The above pigments (1) and (2) are able to suppress discoloration or decomposition of the pigments themselves by ultraviolet rays but are not able to sufficiently suppress the photocatalysis of the pigment. Particularly, such pigments are not supposed to be used together with a fluororesin, the durability against hydrogen fluoride is insufficient. Therefore, they cannot solve the problems (ii) and (iii), whereby discoloration, a change in the visible light reflectance or deterioration of the mechanical strength of the fluororesin film occurs.

On the other hand, in the case of an article to be used outdoors other than the fluororesin film, such as a transportation equipment such as an automobile, a train, etc. or a building component such as a building exterior wall, a roof material, etc. (hereinafter referred to as an "outdoor article"), a glossy coating layer may sometimes be formed by a coating composition containing a white pigment such as a titanium oxide pigment. However, if titanium oxide undergoes discoloration, decomposition or photocatalysis by ultraviolet rays, the visible light reflectance of the coating layer will change, and the gloss will be lost. Many proposals have been made to improve the weather resistance of such a coating layer. However, there has been no report on a white color type coating composition capable of forming a coating layer excellent in the weather resistance (such as acidic rain resistance) to such an extent that the gloss of the coating layer is not impaired even when exposed outdoors for at least 10 years. For example, in a case where a coating layer is formed on a metal substrate, the adhesion between the coating layer and the metal substrate is maintained even after exposed outdoors for a long period of time. However, by the photocatalysis of titanium oxide by ultraviolet rays, the surface of the coating layer may undergo discoloration or cracking, or a resin binder and a pigment may fall off from the surface layer of the coating layer.

Therefore, the present inventors have previously proposed the following pigment as a pigment to solve the problems of a coating layer to be formed on a fluororesin film or on other outdoor articles, etc.
(3) Composite particles having a three-layered structure which comprises, in order from the inside, a particle containing titanium oxide, a covering layer containing cerium oxide and a covering layer containing silicon oxide (Patent Document 3).

By such composite particles, the photocatalysis of titanium oxide is reduced by cerium oxide. Further, by the covering layer containing silicon oxide as an outer layer of cerium oxide, the reaction of cerium oxide with hydrogen fluoride is prevented, whereby the effect to prevent the photocatalysis is maintained.

### PRIOR ART DOCUMENTS

### PATENT DOCUMENTS

Patent Document 1: JP-A-7-315838
Patent Document 2: JP-A-59-184264
Patent Document 3: WO2008/078657

### DISCLOSURE OF INVENTION

### TECHNICAL PROBLEM

However, even in the case where the coating layer is formed by a printing ink or a coating composition containing the composite particles of the above (3) in Patent Document 3, discoloration, decomposition and photocatalysis of titanium oxide were not sufficiently reduced, and by outdoor exposure, the fluororesin film and the coating layer sometimes underwent discoloration or a change in the visible light reflectance.

Under the circumstances, it is an object of the present invention to provide composite particles which are capable of constantly and highly preventing discoloration, decomposition and photocatalysis by ultraviolet rays despite containing titanium oxide, and which are excellent in durability against hydrogen fluoride and are capable of maintaining an inherent color of particles containing titanium oxide used as a core.

Further, it is another object of the present invention to provide a composition for forming a coating layer to be used particularly as a printing ink or a coating material composition, which is capable of forming a coating layer, whereby despite containing titanium oxide, discoloration, a change in the visible light reflectance, deterioration of the mechanical strength and deterioration of gloss of the coating layer can be constantly and highly prevented for a long period of time.

Further, it is a further object of the present invention to provide a coated article having a coating layer, whereby despite containing titanium oxide, discoloration, a change in the visible light reflectance and deterioration of gloss of the coating layer can be constantly and highly prevented for a long period of time.

Further, it is a still further object of the present invention to provide a resin film having a coating layer, whereby despite the fact that the coating layer contains titanium oxide, discoloration, a change in the visible light reflectance and deterioration of the mechanical strength can be constantly and highly prevented for a long period of time.

### SOLUTION TO PROBLEM

Composite particles of the present invention are **characterized in that** each of them comprises, in order from the inside, a particle containing titanium oxide, a first covering layer containing silicon oxide, a second covering layer containing cerium oxide and a third covering layer containing silicon oxide, and their average particle size is from 0.15 to 3 µm.

The composite particles of the present invention are preferably such that per 100 parts by mass of the titanium oxide, the silicon oxide in the first covering layer is from 0.5 to 15 parts by mass, the cerium oxide in the second covering layer is from 3 to 35 parts by mass, and the silicon oxide in the third covering layer is from 5 to 60 parts by mass.

A composition for forming a coating layer of the present invention is a composition which comprises the composite particles of the present invention, a resin and a liquid medium.

In the composition for forming a coating layer of the present invention, the resin is preferably a fluororesin.

A printing ink of the present invention is one made of the composition for forming a coating layer of the present invention.

A coating material composition of the present invention is one made of the composition for forming a coating layer of the present invention.

A coated article of the present invention is one having a coating layer formed from the composition for forming a coating layer of the present invention.

A resin film having a coating layer of the present invention is one which comprises a resin film and a coating layer formed from the composition for forming a coating layer of the present invention, on at least one side of the resin film.

Further, the coating layer is preferably a coating layer formed by a printing method.

Further, the resin film preferably contains a fluororesin film.

Further, the visible light reflectance of the film is preferably from 5 to 75% as measured in accordance with JIS R3106.

### ADVANTAGEOUS EFFECTS OF INVENTION

The composite particles of the present invention are capable of constantly and highly preventing discoloration, decomposition and photocatalysis by ultraviolet rays despite containing titanium oxide, and they are excellent in durability against hydrogen fluoride and are capable of maintaining an inherent color of the particle containing titanium oxide used as the core.

Further, the composition for forming a coating layer of the present invention, particularly the printing ink or the coating material composition, is capable of forming a coating layer, whereby despite containing titanium oxide, discoloration, a change in the visible light reflectance, deterioration of the mechanical strength and deterioration of gloss of the coating layer can be constantly and highly prevented for a long period of time.

Further, the coated article of the present invention has a coating layer, whereby despite containing titanium oxide, discoloration, a change in the visible light reflectance and deterioration of gloss of the coating layer can be constantly and highly prevented for a long period of time.

Further, the resin film having a coating layer of the present invention has a coating layer, whereby despite the fact that the coating layer contains titanium oxide, discoloration, a change in the visible light reflectance and deterioration of the mechanical strength can be constantly and highly prevented for a long period of time.

### BRIEF DESCRIPTION OF DRAWINGS

Fig. 1 is a cross-sectional view showing an example of the resin film having a coating layer of the present invention.
Fig. 2 is a cross-sectional view showing another example of the resin film having a coating layer of the present invention.
Fig. 3 is an optical chart before and after an accelerated weathering test by top print exposure of the resin film having a coating layer in Example 1.
Fig. 4 is an optical chart before and after an accelerated weathering test by back print exposure of the resin film having a coating layer in Example 1.
Fig. 5 is an optical chart before and after an accelerated weathering test by top print exposure of the resin film having a coating layer in Example 7.
Fig. 6 is an optical chart before and after an accelerated weathering test by back print exposure of the resin film having a coating layer in Example 7.
Fig. 7 is an optical chart before and after an accelerated weathering test by top print exposure of the resin film having a coating layer in Example 14.
Fig. 8 is an optical chart before and after an accelerated weathering test by back print exposure of the resin film having a coating layer in Example 14.

### DESCRIPTION OF EMBODIMENTS

### COMPOSITE PARTICLES

The composite particles of the present invention are composite particles each comprising, in order from the inside, a particle containing titanium oxide, a first covering layer containing silicon oxide, a second covering layer containing cerium oxide and a third covering layer containing silicon oxide.

The average particle size of the composite particles is from 0.15 to 3 µm, preferably from 0.2 to 2 µm. The average particle size of the composite particles is meant for an average particle size of particles each comprising from the particle containing titanium oxide to the third covering layer. That is, even if another layer is provided as an outer layer of the third covering layer, the average particle size of composite particles is meant for an average particle size with respect to particles up to the third covering layer.

When the average particle size of the composite particles is at least 0.15 µm, it is possible to sufficiently reflect visible light, as is different from composite particles (average particle size: at most 0.1 µm) to be used for cosmetics required to have transparency. When the average particle size of the composite particles is at most 3 µm, it is possible to form a smooth coating layer from the composition for forming a coating layer containing the composite particles. The average particle size of the composite particles is preferably from 1.1 times to 10 times the average particle size of the particle containing titanium oxide to be used as a core.

The average particle size of the composite particles is measured by using a scanning electron microscope (SEM). As the measuring method, a method may be mentioned wherein the composite particles of the present invention are, for example, put in an alcohol such as isopropanol, and after adjusting the solid content concentration to be about 0.1 mass%, the composite particles are completely dispersed by e.g. ultrasonic waves, followed by dropping on a collodion film and drying, whereupon SEM observation is carried out. In this specification, the particle size is meant for a particle diameter of a particle observed. Further, the average particle size is meant for an average value of twenty particles randomly selected in the obtained SEM image. In the present invention, the average particle size is calculated by such a method.

### PARTICLE CONTAINING TITANIUM OXIDE

The composite particles of the present invention are required to sufficiently reflect visible light, and accordingly, as the core, a particle containing titanium oxide having a high refractive index is used. As disclosed in JP-A-10-292056, if silicon oxide particles having a low refractive index (such as silica, talc or mica) are employed, the visible light cannot adequately be reflected, and a large amount of composite particles will be required in order to improve the visible light reflectance of the resin film.

The particle containing titanium oxide may, for example, be a titanium oxide pigment, a titanium oxide-covered mica or a pigment of a composite oxide containing titanium oxide. Among them, a titanium oxide pigment is preferred from the reflection of visible light, and a titanium oxide pigment having a high sphericity is more preferred.

The composite oxide containing titanium oxide may, for example, be CrSbTI oxide (orange color), FeAlTi oxide (orange color), NiSbTi oxide (lemon color), NiCoZnTi oxide (green color) or MnSbTi oxide (brown color). Further, the pigment of such a composite oxide may, for example, be a yellow pigment (such as titanium yellow or chromium yellow), a green pigment (such as cobalt/zinc/titanium) or a brown pigment (such a manganese brown).

Also a composite oxide containing titanium oxide undergoes discoloration and decomposition by ultraviolet rays and further shows photocatalysis. Therefore, the particle of such a composite oxide is covered by a first covering layer containing silicon oxide, a second covering layer containing cerium oxide and a third covering layer containing silicon oxide. It is thereby possible to obtain composite particles which are capable of constantly and highly preventing discoloration, decomposition and photocatalysis by ultraviolet rays and which are excellent in durability against hydrogen fluoride and have an inherent color of the particle of such a composite oxide used as the core.

The average particle size of the particle containing titanium oxide is preferably from 0.1 to 2 µm, more preferably from 0.2 to 1 µm. When the particle containing titanium oxide has an average particle size of at least 0.1 µm, it tends to sufficiently reflect visible light, as is different from a titanium oxide pigment for application to cosmetics where transparency is required (average particle size: at most 0.05 µm). When the average particle size of the particle containing titanium oxide is at most 2 µm, a smooth coating layer is likely to be easily formed.

The average particle size of the particle containing titanium oxide is obtained as an average value of twenty particles randomly selected in a SEM image in the same manner as for the average particle size of composite particles of the present invention.

### FIRST COVERING LAYER

The first covering layer is a layer containing silicon oxide. By providing the first covering layer, discoloration, decomposition and photocatalysis of titanium oxide by ultraviolet rays can be constantly and highly prevented.

The silicon oxide may, for example, be crystalline silica formed by hydrolysis of ethyl silicate or the like, or non-crystalline amorphous silica made of water glass containing sodium ions, etc.

The first covering layer is preferably a layer containing silicon oxide as the main component. The layer containing silicon oxide as the main component is a layer wherein the content of silicon oxide is at least 50 mass%. The content of silicon oxide in the layer containing silicon oxide as the main component is preferably at least 60 mass%, more preferably at least 75 mass%, particularly preferably 100 mass%.

The first covering layer may be composed of a single layer or may be composed of a plurality of layers. In a case where the first covering layer is composed of a plurality of layers, a part of the first covering layer may be a layer wherein the content of silicon oxide is less than 50 mass% (provided that it is not zero and preferably at least 10 mass%). In such a case, the layer containing silicon oxide as the main component is preferably at least 50 mass%, more preferably at least 65 mass%, based on the entire first covering layer.

A component other than silicon oxide which may be contained in the first covering layer may be a metal oxide other than silicon oxide, such as aluminum oxide, aluminum hydroxide or zirconium oxide. Among them, aluminum oxide or aluminum hydroxide is preferred, since dispersion of particles in water or the like thereby becomes easy at the time of forming the second covering layer on the first covering layer in the production of composite particles.

Silicon oxide in the first covering layer may form a composite oxide with such another metal oxide.

The amount of silicon oxide contained in the first covering layer is preferably from 0.5 to 15 parts by mass, more preferably from 1 to 12 parts by mass, further preferably from 1 to 11 parts by mass, per 100 parts by mass of titanium oxide in the particle containing titanium oxide. When the amount of silicon oxide per 100 parts by mass of titanium oxide is at least 0.5 part by mass, discoloration, decomposition and photocatalysis of titanium oxide by ultraviolet rays can easily be prevented. Further, when the amount of silicon oxide is at least 1 mass%, it becomes easy to completely cover the surface of the particle containing titanium oxide with silicon oxide, and the effect to prevent discoloration, decomposition and photocatalysis of titanium oxide can easily be obtained.

In a case where the first covering layer contains another metal oxide, the amount of silicon oxide contained in the first covering layer does not include the amount of such another metal oxide. Further, in a case where the first covering layer is composed of a plurality of layers, the amount of silicon oxide is the total amount of silicon oxide in all of such layers.

### SECOND COVERING LAYER

The second covering layer is a layer containing cerium oxide. Cerium oxide has a high ultraviolet ray-shielding ability. Therefore, by forming the second covering layer, it is possible to reduce ultraviolet rays that reach the particle containing titanium oxide.

The second covering layer is preferably a layer containing cerium oxide as the main component. The layer containing cerium oxide as the main component is a layer wherein the content of cerium oxide is at least 60 mass%. The content of cerium oxide in the layer containing cerium oxide as the main component is preferably at least 75 mass%, more preferably at least 85 mass%, particularly preferably 100 mass%.

The second covering layer may be composed of a single layer or may be composed of a plurality of layers. In a case where the second covering layer is composed of a plurality of layers, a part of the second covering layer may be a layer wherein the content of cerium oxide is less than 60 mass% (provided that it is not zero and preferably at least 10 mass%). In such a case, the layer containing cerium oxide as the main component is preferably at least 60 mass%, more preferably at least 80 mass%, based on the entire second covering layer.

A component other than cerium oxide contained in the second covering layer may, for example, be a metal oxide other than cerium oxide, such as cerium hydroxide.

Cerium oxide in the third covering layer may form a composite oxide with such another metal oxide.

The amount of cerium oxide contained in the second covering layer is preferably from 3 to 35 parts by mass, more preferably from 3 to 30 parts by mass, further preferably from 5 to 30 parts by mass, particularly preferably from 8 to 20 parts by mass, per 100 parts by mass of titanium oxide in the particle containing titanium oxide. When the amount of cerium oxide per 100 parts by mass of titanium oxide is at least 3 parts by mass, a sufficiently high ultraviolet ray-shielding ability can easily be obtained. Particularly in an application where the conditions are severer like in the case of the after-mentioned back print, the amount of cerium oxide per 100 parts by mass of titanium oxide is preferably at least 5 parts by mass. When the amount of cerium oxide per 100 parts by mass of titanium oxide is at most 35 parts by mass, a yellow tint specific to cerium oxide can be suppressed, so that the inherent color of the particle containing titanium oxide used as the core can easily be reproduced. Further, by the first covering layer containing silicon oxide as the main component, deterioration of the adhesion with the particle containing titanium oxide can easily be prevented, and the second covering layer tends to scarcely detach at the time of preparing a composition for forming a coating layer. The pigment disclosed in Patent Document 1 has an extremely small amount of cerium oxide, whereby the ultraviolet ray-shielding ability is inadequate, and the photocatalysis of the pigment is not sufficiently prevented.

In a case where the second covering layer contains another metal oxide, the amount of cerium oxide contained in the second covering layer does not include the amount of such another metal oxide. Further, in a case where the second covering layer is composed of a plurality of layers, the amount of cerium oxide is the total amount of cerium oxide in all of such layers.

### THIRD COVERING LAYER

The third covering layer is a layer containing silicon oxide.

Silicon oxide in the third covering layer reduces the yellow tint of cerium oxide. Therefore, by providing the third covering layer, the inherent color of the particle containing titanium oxide used as a core can be reproduced. Further, as compared with cerium oxide, silicon oxide has high durability against hydrogen fluoride formed from a fluororesin substrate, a composition for forming a coating layer and a fluororesin binder contained in the coating layer, and, in the case of a resin binder other than a fluororesin, against an acidic decomposed product formed from such a resin binder, although the ultraviolet ray-shielding ability may be low as compared with cerium oxide. As a result, by providing the third covering layer, it is possible to protect the second covering layer containing cerium oxide from an acidic decomposed product such as hydrogen fluoride and to prevent deterioration of the ultraviolet ray-shielding ability of the second covering layer.

The silicon oxide to be contained in the third covering layer may, for example, be crystalline silica formed by hydrolysis of ethyl silicate or the like, or non-crystalline amorphous silica made of water glass containing sodium ions, etc.

The third covering layer is preferably a layer containing silicon oxide as the main component. The layer containing silicon oxide as the main component is a layer wherein the content of silicon oxide is at least 50 mass%. The content of silicon oxide in the layer containing silicon oxide as the main component is preferably at least 60 mass%, more preferably at least 75 mass%, particularly preferably 100 mass%.

The third covering layer may be composed of a single layer or may be composed of a plurality of layers. In a case where the third covering layer is composed of a plurality of layers, a part of the third covering layer may be a layer wherein the content of silicon oxide is less than 50 mass% (provided that it is not zero and preferably at least 10 mass%). In such a case, the layer containing silicon oxide as the main component is preferably at least 50 mass%, more preferably at least 60 mass%, based on the entire third covering layer.

A component other than silicon oxide contained in the third covering layer may, for example, be a metal oxide other than silicon oxide, such as aluminum oxide, aluminum hydroxide or zirconium oxide. Among them, aluminum oxide or aluminum hydroxide is preferred, since dispersion of particles in water or the like thereby becomes easy at the time of forming the second covering layer on the first covering layer in the production of composite particles.

The third covering layer may be the same or different from the first covering layer.

The amount of silicon oxide contained in the third covering layer is preferably from 5 to 60 parts by mass, more preferably from 10 to 50 parts by mass, further preferably from 10 to 30 parts by mass, per 100 parts by mass of titanium oxide in the particle containing titanium oxide. When the amount of silicon oxide per 100 parts by mass of titanium oxide is at least 5 parts by mass, it becomes easy to protect the second covering layer containing cerium oxide from hydrogen fluoride. When the amount of silicon oxide per 100 parts by mass of titanium oxide is at most 60 parts by mass, it is easy to prevent the third covering layer from becoming too thick, whereby the third covering layer tends to scarcely detach at the time of preparing a composition for forming a coating layer. Further, deterioration of the refractive index of composite particles can be suppressed, whereby it is easy to control the coating layer and the amount of composite particles required to prevent the visible light reflectance. The pigment disclosed in Patent Document 1 is not supposed to be used together with a fluororesin, and therefore, the amount of dense amorphous silica is relatively small, whereby there may be a case where cerium oxide cannot be sufficiently protected from hydrogen fluoride.

Further, the amount of silicon oxide contained in the third covering layer is preferably from 50 to 300 parts by mass, more preferably from 100 to 200 parts by mass, per 100 parts by mass of cerium oxide contained in the second covering layer. When the amount of silicon oxide per 100 parts by mass of cerium oxide is at least 50 parts by mass, it is easy to protect the second covering layer containing cerium oxide from hydrogen fluoride. When the amount of silicon oxide per 100 parts by mass of cerium oxide is at most 300 parts by mass, the third covering layer will not be too thick, whereby the third covering layer tends to scarcely detach at the time of preparing a composition for forming a coating layer. Further, deterioration of the refractive index of composite particles can be prevented, whereby it is easy to control the amount of composite particles required to prevent the visible light reflectance of the coating layer and the resin film.

In a case where the third covering layer contains another metal oxide, the amount of silicon oxide contained in the third covering layer does not include the amount of such another metal oxide. Further, in a case where the third covering layer is composed of a plurality of layers, the amount of silicon oxide is the total amount of silicon oxide in all of such layers.

### ANOTHER LAYER

The composite particles of the present invention may have, as the case requires, another layer between the second covering layer and the third covering layer, or outside of the third covering layer.

Such another layer may, for example, be an aluminum oxide layer, an aluminum hydroxide layer or a surfactant layer, to be formed outside of the third covering layer. The aluminum oxide layer, the aluminum hydroxide layer or the surfactant layer is a layer to improve the affinity (dispersibility) of composite particles to a coating material or ink containing a fluororesin binder. The surfactant may, for example, be silicone oil, stearic acid, etc.

### PROCESS FOR PRODUCING COMPOSITE PARTICLES

The composite particles of the present invention may be produced, for example, by the following process (A) having steps (a) to (d) or by the following process (B) having steps (e) to (h).

### PROCESS (A):

(a) A step of forming a first covering layer on a particle containing titanium oxide to obtain a silicon oxide-covered particle.
(b) A step of depositing an insoluble cerium compound on the silicon oxide-covered particle to obtain an insoluble cerium compound-covered particle.
(c) A step of forming a third covering layer on the insoluble cerium compound-covered particle to obtain a precursor particle.
(d) A step of firing the precursor particle to convert the insoluble cerium compound to cerium oxide thereby to obtain a composite particle.

### PROCESS (B):

(e) A step of forming a first covering layer on a particle containing titanium oxide to obtain a silicon oxide-covered particle.
(f) A step of depositing an insoluble cerium compound on the silicon oxide-covered particle to obtain an insoluble cerium compound-covered particle.
(g) A step of firing the insoluble cerium compound-covered particle to convert the insoluble cerium compound to cerium oxide thereby to obtain a cerium oxide-covered particle.
(h) A step of forming a third covering layer on the cerium oxide-covered particle to obtain a composite particle.

### DETAILS OF PROCESS (A)

### STEP (a):

The first covering layer is formed, for example, by a method (a1) disclosed in JP-A-53-33228 or a method (a2) disclosed in JP-A-58-84863.
(a1) While maintaining a slurry of particles containing titanium oxide at from 80 to 100°C, the pH of the slurry is adjusted to from 9 to 10.5, and sodium silicate is rapidly added, followed by neutralization so that the pH becomes from 9 to 10.5 again, and then, the slurry is maintained at from 80 to 100°C for from 50 to 60 minutes.
(a2) While maintaining a slurry of particles containing titanium oxide at from 60 to 100°C, a silicate solution is added, and then a mineral acid is gradually added or a silicate solution and a mineral acid are simultaneously added to adjust the pH of the slurry to at least 8, to obtain a covering treatment product. Then, a solid-liquid separated covering treatment product is heated and fired to remove crystallization water from the covering layer to modify the covering layer to a layer containing silicon oxide thereby to obtain a heat-fired product (silicon oxide-covered particles).

The firing temperature is preferably from 300 to 1,000°C, more preferably from 500 to 900°C. When the firing temperature is at least 300, crystallization water tends to be readily removed. When the firing temperature is at most 1,000°C, it is easy to prevent sintering from proceeding thereby to prevent particles containing titanium oxide from being firmly agglomerated one another.

The above methods (a1) and (a2) are widely carried out, and the product is commercially available as weather resistant titanium oxide. As a silicon oxide-covered particle having the first covering layer formed on the particle containing titanium oxide, a commercial product may be used.

Specifically, trade name "CR90", "PFC105" (manufactured by Ishihara Sangyo Kaisha, Ltd.), "FTR700", "D918" (manufactured by Sakai Chemical Industry Co., Ltd.), "JR805", "JR806" (manufactured by Tayca Corporation), etc. may be mentioned.

Further, other than the above methods (a1) and (a2), for the purpose of preventing photocatalysis of a titanium oxide pigment, a method has been proposed to cover the surface with a water-containing oxide (or a hydrate oxide or a hydroxide) of e.g. silicon oxide or aluminum oxide, or an inorganic compound such as an anhydrous oxide. For example, methods disclosed in JP-A-10-130527, JP-A-8-259731, JP-A-10-110115, JP-A-2008-81578 and JP-A-2006-182896 may be used. According to the method disclosed in JP-A-10-130527, it is possible to obtain silicon oxide-covered particles having high density silica and porous silica sequentially covered on the surface of titanium oxide particles.

### STEP (b):

The insoluble cerium compound is a cerium compound insoluble in water. The insoluble cerium compound may, for example, be cerium hydroxide, cerium phosphate or cerium carbonate, and cerium hydroxide is preferred.

The insoluble cerium compound-covered particle may be produced, for example, by the following method.

The silicon oxide-covered particles are dispersed in water to obtain an aqueous dispersion. While heating such an aqueous dispersion, an aqueous sodium nitrate solution is dropwise added to the aqueous dispersion. Then, an aqueous sodium hydroxide solution is dropwise added to the aqueous dispersion so that the pH of the aqueous dispersion becomes from 7 to 9, whereby cerium hydroxide is deposited on the silicon oxide-covered particles. Then, the liquid containing the insoluble cerium compound-covered particles is subjected to filtration, and the insoluble cerium compound-covered particles are washed with water and dried.

### STEP (c):

The third covering layer is formed by hydrolyzing a silicate (such as sodium silicate) or by hydrolyzing an alkoxysilane (such as ethyl silicate).

The precursor particles may be produced, for example, by the following method.

The insoluble cerium compound-covered particles are dispersed in water by means of a dispersing machine, an emulsifying machine or the like, to obtain an aqueous dispersion. While stirring such an aqueous dispersion, an aqueous silicate solution (such as No. 3 sodium silicate) is dropwise added to such an aqueous dispersion, followed by hydrolysis to form the third covering layer on the insoluble cerium compound-covered particles. The liquid containing the precursor particles is subjected to filtration, and the precursor particles are washed with water and dried.

### STEP (d):

Cerium oxide is chemically stable as compared with the insoluble cerium salt, and therefore, firing is carried out. The firing temperature is preferably from 200 to 1,000°C, more preferably from 400 to 600°C.

The firing time is preferably from 1 to 3 hours.

Agglomerates of fired particles are pulverized to obtain composite particles.

### DETAILS OF PROCESS (B)

### STEP (e):

Step (e) is carried out in the same manner as in Step (a).

### STEP (f):

Step (f) is carried out in the same manner as in Step (b).

### STEP (g):

Cerium oxide is chemically stable as compared with the insoluble cerium salt, and therefore, firing is carried out. The firing temperature is preferably from 200 to 1,000°C, more preferably from 400 to 600°C.

The firing time is preferably from 1 to 3 hours.

Agglomerates of fired particles are pulverized to obtain cerium oxide-covered particles.

### STEP (h):

Composite particles can be produced, for example, by the following method.

The cerium oxide-covered particles are dispersed in a water/alcohol mixed dispersing medium to obtain a dispersion. While stirring such a dispersion, an alkoxysilane (such as ethyl silicate) is added to the dispersion, followed by hydrolysis to form the third covering layer on the cerium oxide-covered particles. The liquid containing the composite particles are subjected to filtration, and the composite particles are washed with water and dried (if necessary, fired).

The composite particles of the present invention are capable of constantly and highly preventing discoloration or a change in the visible light reflectance of the coating layer or resin film for a long period of time. The material to which the composite particles in the coating layer are in direct contact, or the material over which the composite particles in the coating layer are influential (or which are influenced by the composite particles) may, for example, be a substrate material and a resin (resin binder) contained in the coating layer or the composition for forming a coating layer.

The composite particles of the present invention are preferably applied to a case where the substrate material is a fluororesin material, or a case where the resin binder is a fluororesin binder. Further, the composite particles of the present invention are more preferably applied to a case where a coating layer is to be formed by a composition for forming a coating layer using a fluororesin binder, on a substrate made of a fluororesin material.

### COMPOSITION FOR FORMING COATING LAYER

The composition for forming a coating layer of the present invention is a composition comprising the composite particles of the present invention, a resin (a resin binder) and a liquid medium. The composition for forming a coating layer of the present invention is a composition to form a coating layer by a printing method or a coating method. In the present invention, the coating layer is a thin layer containing the composite particles and the resin binder, formed on the substrate surface. The coating layer is formed by forming a thin layer (hereinafter referred to as a "wet layer") of the composition for forming a coating layer, on the substrate surface, followed by removing the liquid medium.

The content of the composite particles in the composition for forming a coating layer is preferably from 5 to 50 mass%, more preferably from 15 to 30 mass%, based on 100 mass% of the entire composition for forming a coating layer.

The content of the resin binder (resin solid content) in the composition for forming a coating layer is preferably from 5 to 60 mass%, more preferably from 15 to 40 mass%, based on 100 mass% of the entire composition for forming a coating layer.

As the composition for forming a coating layer of the present invention, a printing ink and a coating material composition may be mentioned. The printing ink is a composition for forming a coating layer to be used for a printing method. The coating material composition is a composition for forming a coating layer to be used for a coating method.

### PRINTING INK

The printing ink of the present invention is a composition for forming a coating layer to form a coating layer by a printing method and comprises the composite particles of the present invention, a resin (a resin binder) and a liquid medium (a solvent). The printing method is a method of supplying a printing ink to a desired part of the surface of a substrate to form a coating layer-formed surface portion and a coating layer-non-formed surface portion, and usually, a pattern, an image, a letter, etc. are formed by a portion having a coating layer. As the printing method, a gravure printing method or a screen printing method may, for example, be mentioned.

The resin binder is commercially available in the form of a solid state or liquid state of a resin, or in the form having a resin dissolved or dispersed in a solvent. A solvent-soluble resin is particularly preferred.

The resin binder is preferably a fluororesin, an acryl polyol, an acryl resin or an acryl silicone, since the resin itself has excellent weather resistance and is excellent with adhesion to a resin film, and a fluororesin is more preferred since it is excellent in weather resistance.

As a fluororesin for a binder, a fluororesin having a good solvent solubility known as a fluororesin for a coating material is preferred.

The fluororesin for a binder may, for example, be "Lumiflon" (trade name), manufactured by Asahi Glass Company, Limited or "THV" (trade name) manufactured by Dyneon LLC, which is commercially available as a fluororesin for coating material. Such a fluororesin is soluble in a solvent such as toluene or methyl ethyl ketone and is suitable as a resin binder.

The fluororesin for a coating material is usually a thermosetting resin type to be used in combination with a curing agent, but a fluororesin for coating material not using a curing agent is also available. For example, the above-mentioned "Lumiflon" is a copolymer having fluoroethylene units and vinyl ether units and has hydroxy groups. A fluororesin having hydroxy groups is, in many cases, used in combination with a curing agent, but it is not essential to use a curing agent in combination. By a combined use with a curing agent, a relatively hard coating layer can be obtained, and if no curing agent is used in combination, a relatively flexible coating film can be obtained.

The acryl polyol is a copolymer of a monomer having a hydroxy group (such as a hydroxyalkyl acrylate or a hydroxyalkyl methacrylate) with another monomer (such as an alkyl acrylate or an alkyl methacrylate) and is used in combination with a curing agent in many cases, like the above-mentioned fluororesin having hydroxy groups. The alkyl polyol may, for example, be "Acrylet QT507-28" (trade name) manufactured by Taisei Fine Chemical Co., Ltd.

The acryl resin is a polymer of at least one type of an acrylate monomer (such as an alkyl acrylate or an alkyl methacrylate), or a copolymer of such an acrylate monomer with another monomer. The acryl resin may, for example, be "Dianal BP80" (trade name) manufactured by Mitsubishi Rayon Co., Ltd.

The acryl silicone is a copolymer wherein a polymer chain of an acrylic resin and an organosilicone chain (such as dimethyl silicone) are bonded. The acryl silicone may, for example, be "Silacoat SCT-8102" (trade name) manufactured by Chisso Corporation.

The liquid medium (solvent) is one to disperse the composite particles and to dissolve or disperse the resin binder and means one which is liquid at room temperature such as water or an organic solvent (the boiling point is usually at most 150°C).

The solvent may, for example, be one organic solvent such as toluene, xylene, methyl ethyl ketone, an alcohol, solvesso (an aromatic hydrocarbon mixture manufactured by ExxonMobil Chemical Company), anone or N-methyl pyrrolidone; or water. As the solvent, the most suitable solvent is selected depending upon the printing method (such as a gravure printing method or a screen printing method) and in consideration of repellency of a printing ink on an article such as a resin film, a transfer rate, a drying property of the printing ink and the storage stability of the printing ink. For example, in the gravure printing on a fluororesin film, toluene, xylene, methyl ethyl ketone or a mixed solvent thereof is preferred, since the surface of the fluororesin film having surface treatment applied for printing can easily be wetted, and the boiling point is not so high.

The printing ink may contain a solvent for dilution.

The content of the composite particles in the printing ink is preferably from 5 to 50 mass%, more preferably from 15 to 30 mass%, based on 100 mass% of the entire printing ink. When the content of the composite particles is at least 5 mass%, the masking effect can easily be obtained, and it becomes easy to obtain the desired visible light reflectance. When the content of the composite particles is at most 50 mass%, it is easy to prevent the viscosity during the printing from becoming too high, and clear and defectless printing can easily be applied. Further, the adhesion to the substrate will be improved.

Further, the content of the composite particles in the printing ink is preferably from 30 to 200 parts by mass, more preferably from 50 to 150 parts by mass, per 100 parts by mass of the resin binder (resin solid content).

The content of the resin binder (resin solid content) in the printing ink is preferably from 10 to 50 mass%, more preferably from 15 to 40 mass%, based on 100 mass% of the entire printing ink. When the content of the resin solid content is at least 10 mass%, a coating layer having a thickness of at least 1 µm after drying can easily be obtained, and the desired visible light reflectance can easily be obtained. When the content of the resin solid content is at most 50 mass%, it is easy to prevent the viscosity at the time of printing from becoming too high, and clear and defectless printing can easily be applied.

The printing ink may contain a pigment other than the composite particles of the present invention. Another pigment may, for example, be a coloring pigment such as an organic pigment or an inorganic pigment. Specifically, carbon black (black pigment), iron oxide (red pigment), aluminum cobalt oxide (blue pigment), copper phthalocyanine (blue pigment, green pigment), perylene (red pigment) or bismuth vanadate (yellow pigment) may, for example, be mentioned.

The total amount of the composite particles and another pigment in the printing ink is preferably from 30 to 200 parts by mass, more preferably from 50 to 150 parts by mass, per 100 parts by mass of the resin binder.

In a case where the resin binder in the printing ink is a curable resin (or its combined use with a curing agent), the coating layer can be formed by curing the resin binder after forming a wet layer, at the same time as removal of the liquid medium, or after removing the liquid medium. Further, in a case where the resin binder is a non-curable resin and no curing agent is used in combination, the coating layer may be formed by removing the liquid medium for solidification. Further, the coating layer may be formed also by solidification by removal of the liquid medium, followed by heat melting and then by cooling for solidification.

### COATING MATERIAL COMPOSITION

The coating material composition is a composition for forming a coating layer, to form a coating layer by a coating method, and comprises the composite particles of the present invention, a resin binder and a liquid medium. The coating method is a method for forming a coating layer other than a printing method and is usually a method for forming a coating layer over the entire desired surface of a substrate. However, by preliminarily setting a portion on the surface of the substrate where the coating material composition is applied and a portion where the coating material composition is not applied, patterns, images, letters, etc. may be formed by a coating method.

The content of the composite particles in the coating material composition is preferably from 10 to 50 mass%, more preferably from 15 to 30 mass%, based on 100 mass% of the entire coating material composition. When the content of the composite particles is at least 10 mass%, the masking property can be easily obtained so that an influence of the substrate color can be avoided. Further, when the content of the composite particles is at most 50 mass%, it is easy to prevent the viscosity at the time of the coating from becoming too high, and it is easy to form a coating layer having a uniform thickness.

Further, the amount of the composite particles in the coating material composition is preferably from 10 to 200 parts by mass, more preferably from 30 to 150 parts by mass, per 100 parts by mass of the resin binder (resin solid content).

The resin binder and the liquid medium contained in the coating material composition may be the same ones as those mentioned for the printing ink. Further, in some cases, water may be used as the liquid medium.

As the resin binder, a fluororesin, an acryl polyol, an acryl resin or an acryl silicone is preferred, and a fluororesin is more preferred, since it is excellent in weather resistance. The fluororesin binder to be used for the coating material composition is basically the same as the fluororesin binder in the above-mentioned printing ink. However, while in the case of the printing ink, it is not required to use a curing agent, in the case of the coating material composition, a curing agent is used in many cases. The reason is such that the coating layer formed by a coating method is usually thick as compared with the coating layer formed by a printing method, and in order to sufficiently cure such a relatively thick layer, a curing agent is required.

As the fluororesin binder, preferred is a combination of a curing agent and a solvent-soluble or water-dispersible fluorinated polymer, which is known as a fluororesin for coating material.

As such a fluorinated polymer, preferred is a polymer which is a copolymer of a fluoroolefin with a hydrocarbon type monomer and which has curing reaction sites. The curing reaction sites are introduced by using a monomer having a curing reaction site as a part of the hydrocarbon monomer.

As the fluoroolefin, tetrafluoroethylene, chlorotrifluoroethylene, vinylidene fluoride or a perfluoropropyl vinyl ether is preferred, and tetrafluoroethylene or chlorotrifluoroethylene is more preferred.

As the hydrocarbon monomer, an alkenyl ether type monomer (such as a vinyl ether, an allyl ether, an isopropenyl ether, or the like), or an alkenyl ester type monomer (such as a carboxylic acid vinyl ester, a carboxylic acid allyl ester, an unsaturated carboxylic acid ester or the like) is preferred. As the hydrocarbon monomer, particularly preferred is one composed of at least one type of a vinyl ether, or a combination of at least one type of a vinyl ether with at least one type of another hydrocarbon monomer (a carboxylic acid vinyl ester is particularly preferred). The vinyl ether may, for example, be an alkyl vinyl ether (such as ethyl vinyl ether, butyl vinyl ether or the like), a cycloalkyl vinyl ether (such as cyclohexyl vinyl ether or the like), or a hydroxyalkyl vinyl ether. The carboxylic acid vinyl ester may, for example, be vinyl acetate or vinyl pivalate.

The proportion of repeating units based on a fluoroolefin in the copolymer of a fluoroolefin with a hydrocarbon monomer, is preferably from 30 to 70 mol%, more preferably from 40 to 60 mol%, based on 100 mol% of all repeating units.

The curing reaction sites in the fluorinated polymer are preferably hydroxy groups, carboxy groups or epoxy groups. Further, they may be curing reaction sites formed by introducing other functional groups to such functional groups in the fluorinated polymer. Further, the fluorinated polymer may have two or more types of functional groups. For example, it is possible to use a fluorinated polymer having hydroxy groups and carboxy groups. Functional groups such as hydroxy groups, carboxy groups or epoxy groups are introduced by copolymerizing a hydrocarbon monomer having such a functional group. The hydrocarbon monomer having such a functional group may, for example, be 4-hydroxybutyl vinyl ether, glycidyl vinyl ether or glycidyl vinyl ester.

A particularly preferred fluorinated polymer is a hydroxy group-containing fluorinated polymer. Its hydroxy group value is preferably from 10 to 150 mgKOH/g.

The content of the resin binder (resin solid content) in the coating material composition is preferably from 10 to 60 mass%, more preferably from 15 to 40 mass%, based on 100 mass% of the entire coating material composition. When the content of the resin solid content is at least 10 mass%, it is easy to obtain a coating layer having a thickness after drying of at least 5 µm. When the content of the resin solid content is at most 60 mass%, it is easy to prevent the viscosity at the time of coating from becoming too high, and it is easy to form a coating layer having a uniform thickness.

As the curing agent, a curing agent known as a curing agent for coating material may suitably be selected for use. Specifically, it may, for example, be an isocyanate type curing agent, a block isocyanate type curing agent, an aminoplast type curing agent, a polybasic carboxylic acid type curing agent or a polyvalent amine type curing agent. Selection of the curing agent is preferably carried out in consideration of the type of curing reaction sites of the fluorinated polymer, the curing properties, etc. As a curing agent to be used together with a hydroxy group-containing fluorinated polymer, an isocyanate type curing agent, a block isocyanate type curing agent or an aminoplast type curing agent is preferred.

In a case where a curing agent which undergoes a curing reaction at normal temperature is to be employed, it is preferred to adopt such a two-component curable coating material composition that the curing agent is prepared separately from the main agent containing a hydroxy group-containing fluorinated polymer, and at the time of forming a coating layer, they are mixed. Other components which are not reactive with the hydroxy group-containing fluorinated polymer are preferably incorporated to the main agent. To use such a two-component curable coating material composition, a coating material composition having the main agent and the curing agent mixed, is applied on a substrate, followed by drying at normal temperature to form a coating layer on the substrate.

Further, in a case where a curing agent which undergoes a curing reaction by heating, is to be employed, the curing agent and the hydroxy group-containing fluorinated polymer may be co-existent in the coating material composition, to form a one-component curable baking coating material composition. In such a case, the coating material composition may be applied on a substrate, followed by baking to form a coating layer on the substrate.

The curing agent which undergoes a curing reaction at normal temperature may, for example, be a non-yellowing diisocyanate (hexamethylene diisocyanate, isophorone diisocyanate, or the like) or a polyvalent isocyanate type curing agent (such as an adduct or oligomer of the above non-yellowing diisocyanate).

The curing agent which undergoes a curing reaction by heating, may, for example, be a block isocyanate type curing agent or an aminoplast curing agent.

A polyisocyanate type curing agent containing isocyanate groups is particularly useful. In such a case, it is preferred to further add a curing catalyst such as dibutyltin dilaurate to accelerate the curing.

If the amount of the curing agent used, is too small, no adequate curing performance will be obtained, and if it is too large, many unreacted sites of the curing agent will remain, such being undesirable from the viewpoint of durability of the coating layer. The amount of the curing agent is suitably set so that no such troubles will occur. For example, in a combined use of the hydroxy group-containing fluorinated polymer and the curing agent, the amount of the curing agent is preferably from 0.1 to 200 parts by mass, more preferably from 1 to 100 parts by mass, per 100 parts by mass of the hydroxy group-containing fluorinated polymer.

In the coating material composition, the molar ratio of NCO present in the curing agent to OH which is supplied from the hydroxy group-containing fluorinated polymer, i.e. [NCO]/[OH], is preferably from 0.5 to 3.0. When the molar ratio [NCO]/[OH] is at least 0.5, adequate curing performance can easily be obtained. When the molar ratio [NCO]/[OH] is at most 3.0, it is easy to prevent deterioration of the durability of the coating layer attributable to unreacted NCO groups. In a case where no curing agent is employed, the coating material composition of the present invention can be used as a one-component lacquer type coating material composition.

The coating material composition may contain a pigment other than the composite particles of the present invention. Such another pigment may, for example, be a coloring pigment such as an organic pigment or an inorganic pigment. Specifically, carbon black (black pigment), iron oxide (red pigment), aluminum cobalt oxide (blue pigment), copper phthalocyanine (blue pigment or green pigment), perylene (red pigment) or bismuth vanadate (yellow pigment) may, for example, be mentioned. The total amount of the composite particles of the present invention and another pigment in the coating composition is preferably from 10 to 200 parts by mass, more preferably from 30 to 150 parts by mass, per 100 parts by mass of the resin binder.

In a case where the resin binder in the coating material composition is a curable resin (or a combined use with a curing agent), a coating layer may be formed in such a manner that after forming a wet layer, the resin binder is cured at the same time as removal of the liquid medium or after removing the liquid medium. Further, in a case where the resin binder is a non-curable resin, and no curing agent is employed, a coating layer may be formed by removing the liquid medium for solidification. Further, a coating layer may be formed by removing the liquid medium for solidification, followed by heat melting and then by cooling for solidification.

### COATED ARTICLE

The coated article of the present invention is an article having on its surface a coating layer formed by using the composition for forming a coating layer of the present invention. That is, the coated article of the present invention has a coating layer formed by a printing method using a printing ink or a coating layer formed by a coating method using the coating material composition, on the surface of an article. Hereinafter, a coated article having a coating layer formed by a printing method and a coated article having a coating layer formed by a coating method will be sequentially described.

A substrate (article) on which a coating layer is to be formed by a printing method using a printing ink, will be referred to as a "printing substrate". As such a printing substrate, a substrate made of various material may be used. The composite particles of the present invention are a pigment capable of forming a coating layer having high durability, whereby the visible light reflectance can be adjusted, and the printing substrate is preferably a substrate having visible light transmittance. The printing substrate may, for example, be a resin film, a resin sheet or a glass sheet. The resin sheet is meant for a plate-like body having a thickness thicker than a resin film.

As the printing substrate, a resin film is particularly preferred. In a case where the printing substrate is a flat substrate of e.g. a resin film, the coating layer may be formed only on one side of the substrate or may be formed on both sides of the substrate.

Now, a resin film having a coating layer, wherein the coating layer is formed on a resin film by a printing method, will be described in detail.

### RESIN FILM HAVING COATING LAYER

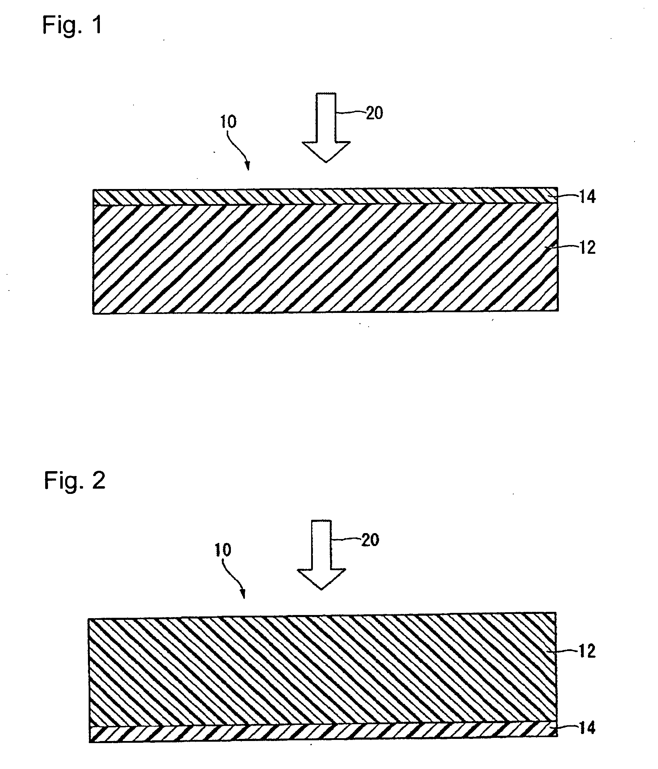

Fig. 1 is a cross-sectional view showing an example of the resin film having a coating layer of the present invention. The resin film 10 having a coating layer, has a coating layer 14 on a resin film 12. In the resin film 10 having a coating layer, it is preferred that the coating layer 14 contains a fluororesin binder. Further, the resin film 12 is preferably a fluororesin film.

The material for the resin film 12 may, for example, be polyethylene, polypropylene, polyethylene terephthalate (hereinafter referred to as "PET"), an acrylic resin, a polycarbonate or a fluororesin. Among them, a fluororesin is preferred from the viewpoint of the weather resistance. Especially in a case where the resin film 12 is not a fluororesin film, it is preferred that the resin binder in the printing ink is a fluororesin binder.

The fluororesin to be used for the film may, for example, be a vinyl fluoride type polymer, a vinylidene fluoride type polymer, a vinylidene fluoride/hexafluoropropylene copolymer, a tetrafluoroethylene/hexafluoropropylene/vinylidene fluoride copolymer, a tetrafluoroethylene/propylene copolymer, a tetrafluoroethylene/vinylidene fluoride/propylene copolymer, an ethylene/tetrafluoroethylene copolymer (hereinafter referred to as "ETFE"), a hexafluoropropylene/tetrafluoroethylene copolymer or a perfluoro(alkyl vinyl ether)/tetrafluoroethylene copolymer.

As the fluororesin to be used for the film, ETFE, a hexafluoropropylene/tetrafluoroethylene copolymer, a perfluoro(alkyl vinyl ether)/tetrafluoroethylene copolymer, a tetrafluoroethylene/hexafluoropropylene/vinylidene fluoride copolymer or a vinylidene fluoride type polymer is preferred, since it is excellent in transparency and weather resistance.

The thickness of the resin film 12 is preferably from 5 to 500 µm, more preferably from 20 to 300 µm. If the thickness of the resin film exceeds 500 µm, the flexibility of the film tends to be inadequate, and it may not be possible to meet with a design of a film having a curved surface. Further, if the thickness is less than 5 µm, the handling tends to be difficult, and at the same time, it may not be possible to satisfy the mechanical strength expected as a structural material.

The thickness of the coating layer 14 is preferably from 0.2 to 20 µm, more preferably from 0.5 to 10 µm, particularly preferably from 1 to 5 µm. If the thickness exceeds 20 µm, the coating layer 14 may not be able to follow a slight expansion or shrinkage of the resin film 12 due to warmness or coldness, whereby peeling of the coating layer 14 may result. Further, if the thickness is less than 0.2 µm, a slight reduction of the coating layer 14 is likely to substantially deteriorate the coating layer performance. Therefore, at the time of packing or transporting the film, it may be required to pay sufficient attention to abrasion by e.g. contact with other materials, or abrasion by a sand storm may occur.

In a case where the resin film 10 having a coating layer is to be employed as a roof material, a wall material, etc., the layered structure of the resin film 10 having a coating layer may be in the order of the coating layer 14 and the resin film 12 from the incident side of light 20 as shown in Fig. 1 (top print), or may be in the order of the resin film 12 and the coating layer 14 from the incident side of light 20 as shown in Fig. 2 (back print). In any case, from the viewpoint of weather resistance, one containing a fluororesin among the resin film 12 and the coating layer 14, should preferably be on the incident side of light 20.

The resin film 10 having a coating layer may, for example, be produced by forming a wet layer by applying a printing ink on the surface of a resin film 12 by a printing method, followed by vaporizing the solvent contained in the wet layer to form a coating layer 14. In a case where the resin binder in the printing ink is a curable resin, the resin binder is cured at the same time as the removal of the solvent by vaporization or after removal of the solvent by vaporization. Curing of the resin binder is usually carried out by heat curing, but in the case of a normal temperature curable resin, heating is not required. In the case of a photocurable resin, it is cured by irradiation with e.g. ultraviolet rays.

The printing method may, for example, be a gravure printing method or a screen printing method. Usually, by printing, patterns, images, letters, etc. are formed on the surface of the resin film 12 with a portion where no coating layer 14 is present being the background and the coating layer 14 being the design. In a case where the proportion of the area of the coating film 14 is high to the surface area of the resin film 12, the relation between the background and the design may be reversed. The visible light reflectance on the resin film 12 may be adjusted by adjusting the proportion of the area of the coating layer 14 to the surface area of the resin film 12 by forming dot-shaped or line-shaped coating layer portions.

In order to improve the adhesion between the coating layer 14 and the resin film 12, it is preferred to heat the coating layer at from 60°C to 150°C for from 2 to 30 seconds after printing, while removing the solvent in the wet layer or after removal of the solvent. In a case where the resin binder is a curable resin, it can sufficiently be cured by this heating. Also in a case where the resin binder is a non-curable resin, the adhesion with the resin film 12 will be improved. For example, in the case of a hydroxy group-containing fluororesin using no curing agent, it is possible to improve the adhesion between the coating layer 14 and the resin film 12 by reacting hydroxy groups of the resin binder to functional groups formed on the fluororesin film having the after-mentioned surface treatment applied.

At the time of printing, it is preferred to preliminarily apply surface treatment to the surface on which the coating layer 14 is to be formed, of the resin film 12, in order to improve the adhesion between the coating layer 14 and the resin film 12.

The surface treatment may, for example, be corona discharge treatment, metallic sodium treatment, mechanical surface roughening treatment, or excimer laser treatment. Among them, corona discharge treatment is preferred, since it is inexpensive.

At the time of carrying out corona discharge treatment, it is advantageous from the viewpoint of the production process to dispose a corona discharge treatment machine on the production line of the resin film 12 for sequential treatment. The treating conditions are selected depending upon the material of the resin film 12 to be treated and the desired degree of treatment. The corona discharge treatment is preferably carried out under conditions of the intensity being from 0.1 to 10 kW and the treating time being from 0.5 to 100 m²/min.

In order to obtain good adhesion between the coating layer 14 and the resin film 12, the surface treatment is preferably applied so that the surface tension of the resin film 12 becomes at least 0.035 N/m. The surface tension of the resin film 12 is more preferably at least 0.04 N/m.

It is considered that by applying the surface treatment, oxygen-containing functional groups and/or nitrogen-containing functional groups are introduced to the surface of the resin film 12, and after printing, the functional groups on the surface of the resin film 12 and oxygen-containing functional groups (hydroxy groups, carboxy groups, etc.) in a fluororesin, a silicone resin, an acryl silicone resin, a curing agent, etc. in the coating layer 14, will form chemical bonds, whereby the adhesion between the coating layer 14 and the resin film 12 will be improved.

The visible light reflectance of the resin film 10 having a coating layer is preferably from 5 to 75%, more preferably from 10 to 65%. When the visible light reflectance of the resin film 10 having a coating layer is at least 5 %, its design property can easily be recognized. Further, when it is at least 5%, it becomes possible to prevent the room temperature from increasing too much in the film structure formed by the resin film 10 having a coating layer. When the visible light reflectance of the resin film 10 having a coating layer is at most 75%, it is easy to secure necessary illuminance for human activity in winter even when a design is imparted.

The visible light reflectance of the resin film 10 having a coating layer is measured in accordance with JIS R3106 "Test methods for transmittance/reflectance/emissivity/solar radiation heat acquisition rate of plate glasses".

In a case where the coating layer 14 is formed partially on the surface of the resin film 12, the visible light reflectance of the resin film 10 having a coating layer is obtained from the following formula.

Visible light reflectance of resin film having coating layer = (visible light reflectance of a portion where the coating layer is formed) × (area ratio of the portion where the coating layer is formed) + (visible light reflectance at a portion where no coating layer is formed) × (area ratio of the portion where no coating layer is formed).

For example, in a case where on a resin film 12 made of a fluororesin having a visible light reflectance of 4%, a coating layer 14 is formed at 50% of the surface area of the resin film 12, and the visible light reflectance at the portion where the coating layer 14 is formed, is 60%, the visible light reflectance of the entire resin film 10 having the coating layer is calculated to be 32%.

The visible light reflectance of the resin film 10 having a coating layer can optionally be set by suitably setting the amount of the pigment (including composite particles) in the coating layer 14, the thickness of the coating layer 14, the area of the coating layer 14, etc.

With a usual resin film having a coating layer, in a case where it is subjected to back print exposure (e.g. Fig. 2) wherein light enters from the resin film 12 side, the light impinges on the interface in the coating layer 14 and the resin film 12 without transmitting through the coating layer 14, whereby in addition to deterioration such as cracking of the coating layer 14, the adhesion at the interface deteriorates, and the coating layer 14 and the resin film 12 may peel. Further, if the resin binder is decomposed by photocatalysis of titanium oxide, the dispersed state of particles containing titanium oxide in the coating layer 14 will change, and particles containing titanium oxide will agglomerate. As a result, a phenomenon is observed such that the visible light reflectance increases and the visible light transmittance decreases. In such a case, the resin binder constituting the coating layer 14 is decomposed, whereby in an adhesive tape peeling test, cohesion failure is observed. Further, also decomposition of the resin film 12 itself will occur due to the photocatalysis of titanium oxide, whereby the mechanical strength of the resin film 12 may remarkably be deteriorated. Also in a case where another pigment is used in combination, like in a case where a green pigment and a white pigment are mixed to form a greenish white coating layer, if the resin binder is decomposed by the photocatalysis of titanium oxide of the white pigment, the coating layer 14 may peel from the film.

On the other hand, in the case of top print exposure (e.g. Fig. 1) wherein light enters from the coating layer 14 side, deterioration starts from the surface layer of the coating layer 14. If the surface of the coating layer 14 becomes brittle, in the adhesive tape peeling test, cohesion failure of the coating layer 14 will be observed. However, ultraviolet rays are shielded to some extent by particles containing titanium oxide contained in the coating layer 14, and it takes a long time until the deterioration reaches the interface between the coating layer 14 and the resin film 12, whereby as compared with the back print exposure, peeling between the coating layer 14 and the resin film 12 is less likely to occur. Further, the photocatalysis is less likely to reach the resin film 12 itself, and as compared with back print exposure, the mechanical strength of the resin film 12 is less likely to deteriorate.

However, in a case where another pigment is used in combination like in a case where a green pigment and a white pigment are mixed to form a greenish white coating layer, if the resin binder is decomposed by the photocatalysis by titanium oxide, the distribution of titanium oxide and the resin binder changes in the coating layer 14, and titanium oxide particles will agglomerate at the surface layer. As a result, the color of the coating layer undergoes a substantial change, and the greenish white color distinctly becomes close to a white color. That is, the visible light reflectance increases, and the reflection color difference (ΔE*) changes substantially. In the chromatic coordinate, L* (luminosity) increases substantially.

As described in the foregoing, with a conventional ink using titanium oxide, in the case of top printing, changes in the visible light reflectance and the color are particularly likely to occur, and in the case of back printing, deterioration of the adhesion is particularly likely to occur. Therefore, composite particles to be used for such applications, are required to have excellent properties particularly in weather resistance. As composite particles to be used for a printing ink (a composition for forming a coating layer) suitable for such applications, ones having a large amount of cerium oxide in the composite particles are preferred. Specifically, composite particles wherein the amount of cerium oxide in the second covering layer is from 5 to 30 parts by mass per 100 parts by mass of titanium oxide contained in particles containing titanium oxide, are particularly preferred. With composite particles wherein the amount of cerium oxide is within the above range, even in the case of back print exposure, deterioration of the mechanical strength of the resin film due to photocatalysis is less likely to occur. Accordingly, with such composite particles, it is possible to form a good coating layer irrespective of whether the printing ink is for back printing or for top printing.

Further, the resin film having a coating layer of the present invention may be formed by a coating method using a coating material composition.

Now, a coated article having coating layer formed by a coating method using a coating material composition will be described. Here, a substrate (article) on which a coating film is to be formed by a coating method using a coating material composition will be referred to as a "coating substrate".

The material for the coating substrate is not particularly limited. For example, in addition to the material (a fluororesin, etc.) mentioned above as the printing substrate, other various synthetic resin materials or natural resin materials, and inorganic materials (metals, glass, ceramics, inorganic cements, etc.) may be mentioned. However, in such a case, the resin binder in the coating material composition is preferably a fluororesin binder.

The shape of the coating substrate is not limited to a film, a sheet, etc. Further, the coating substrate may or may not have a visible light transmittance.

The coating layer to be formed by the coating material composition of the present invention is preferably one formed on an outdoor article. That is, the coating substrate is preferably an outdoor article.

The outdoor article may, for example, be a transportation equipment (an automobile, a train, a helicopter, a boat, a bicycle, a snowmobile, a ropeway, a lift, a hovercraft, a motor cycle, etc.), a building material (a sash, a shutter, a water tank, a door, a balcony, a building outer wall, a building outer plate panel, a roof material, a staircase, a sky light window, a concrete wall, etc.), a road material (a guardrail, a foot bridge, a sound-insulating wall, a sign, a highway sidewall, an elevated railroad track, a bridge, etc.), a plant installation (a tank, a pipe, a tower, a chimney, etc.), an agricultural installation (a plastic greenhouse, a glasshouse, a silo, an agricultural sheet, etc.), a communication installation (a telephone pole, a transmission line tower, a parabola antenna, etc.), an electric instrument (an electric wiring box, an illumination equipment, an air conditioner, a washing machine, etc.), a monument, a gravestone, a paving, a wind proof sheet, a water proof sheet, a building curing sheet, etc.

The coating layer may be formed by applying the coating material composition, followed by drying to remove the liquid medium, in a case where the resin binder is not a curable resin, or no curing agent is used. Further, as the case requires, heat drying may be carried out. In a case where the resin binder is a curable resin, or a curing agent is used, curing by baking may be carried out, as the case requires.

As a coating method for the coating material composition, a known method may be used. For example, brush coating, roller coating, manual coating by means of a wiper or squeegee, spin coating, dip coating, bar coating, curtain flow coating, die coating, flow coating, spray coating or sponge coating may, for example, be mentioned. Particularly in the case of coating at site, sponge coating is preferred, since nonuniformity in the coating layer is less likely to occur, and it is easy to adjust the coating to the size of the portion to be coated.

Further, for the purpose of increasing the mechanical strength of the coating layer, heating, ultraviolet irradiation or electron beam irradiation, etc., may suitably be carried out after applying the coating material composition, within a practically acceptable range.

The thickness of the coating layer is preferably from 10 to 1,000 µm, more preferably from 30 to 300 µm. When the layer thickness is at least 10 µm, even in a case where by impingement of sand, pebble, etc. out of doors, dents are formed in the coating layer, or physical destruction of the coating layer such as abrasion proceeds, it is easy to prevent modification of the coated substrate by infiltration of acidic rain or ozone gas through the coating layer. Further, when the layer thickness is at most 1,000 µm, drying of the coating material composition tends to be uniform, whereby it is easy to form a dense coating layer.

The application of the composite particles of the present invention is not limited to the application as a component of the composition for forming a coating layer of the present invention. For example, by using a liquid curable resin as the resin binder, a composition for forming a coating layer similar to the composition of the present invention may be formed without using a liquid medium.

### ADVANTAGEOUS EFFECTS

Now, the advantageous effects of the composite particles of the present invention will be described in detail.

With the composite particles having two covering layers as disclosed in Patent Document 3, when they were used for a printing ink or a coating material composition, it sometimes happened that discoloration, decomposition and photocatalysis of titanium oxide could not sufficiently be prevented. The present inventors have studied the reason and have found the cause to be such that with the composite particles as disclosed in Patent Document 3, the covering layer containing cerium oxide and the covering layer containing silicon oxide were both likely to fall off from the particle containing titanium oxide in the following step (α) or (β) in the production for a printing ink or a coating composition. That is, in the following step (α) or (β), in many particles, the above-mentioned two covering layers fell off from the particle containing titanium oxide, so that the surface not covered by cerium oxide (the particle containing titanium oxide itself) was exposed, whereby from such a portion, discoloration, decomposition and photocatalysis of titanium oxide occurred.

(α) A step of forming a covering layer containing silicon oxide on the covering layer containing cerium oxide, followed by pulverizing agglomerates of such particles to adjust the particle size to a level of from 0.2 to 0.8 µm.

(β) A step of carrying out ink milling by means of a triple roll mill, or dispersing into an ink varnish while pulverizing by means of a ball mill or beads mill, in order to obtain a printing ink having a prescribed particle size distribution.

Therefore, a further study has been made, and the present inventors have found it possible to prevent falling off of the covering layer containing cerium oxide by further forming a covering layer containing silicon oxide between the particle containing titanium oxide and the covering layer containing cerium oxide. That is, they have found it possible to prevent falling off of the second covering layer and the third covering layer by sequentially forming on a particle containing titanium oxide, a first covering layer containing silicon oxide, a second covering layer containing cerium oxide and a third covering layer containing silicon oxide, thereby to constantly and highly prevent discoloration, decomposition and photocatalysis of titanium oxide. Details of the mechanism for preventing falling off of the second covering layer and the third covering layer by providing the first covering layer are not clearly understood, but it is considered that the first covering layer plays a role as a binder to firmly adhere the particle containing titanium oxide and the second covering layer.

With the second covering layer, cerium oxide contained in that layer has an ultraviolet ray-shielding ability and thus reduces the amount of ultraviolet rays that reach the particle containing titanium oxide. It is thereby possible to prevent an influence of the ultraviolet rays over titanium oxide covered by the second covering layer.

Even in a case where the second covering layer is not provided, deterioration of the substrate, etc. by the photocatalysis can be suppressed to some extent, since the particle containing titanium oxide is not in contact with the substrate (resin film, etc.) or the resin binder. However, if the second covering layer is not provided, the effect to suppress deterioration of the substrate, etc. is low. This indicates that in order to prevent deterioration of the substrate, etc., it is important not only to avoid the contact of the particle containing titanium oxide with the substrate, etc. but also to reduce ultraviolet rays that reach the particle containing titanium oxide.

The third covering layer prevents deterioration of the ultraviolet ray-shielding ability of the second covering layer by hydrogen fluoride. The mechanism for the deterioration of the ultraviolet ray-shielding ability of the second covering layer by hydrogen fluoride is as follows.

When the coating layer or the substrate (resin film, etc.) contains a fluororesin, hydrogen fluoride will be formed for the following reason.
(I) In a case where surface treatment such as corona discharge treatment is applied to a resin film containing a fluororesin before forming a coating layer, hydrogen fluoride will be formed by decomposition of the fluororesin.
(II) When the resin film is exposed to sun light, hydrogen fluoride will be formed by photodecomposition of the fluororesin.
(III) If titanium oxide not sufficiently covered, is present, hydrogen fluoride will be formed by decomposition of the fluororesin in the resin film or the resin binder by its photocatalysis.
(IV) Even in a case where a fluororesin which is supposed to have the best weather resistance is used as a resin binder, by such an exposure that exceeds ten years, the resin binder is likely to undergo photodecomposition, whereby a very small amount of hydrogen fluoride may be formed, or hydrogen chloride derived from the constituting element of the raw material monomer may sometimes be formed.

If cerium oxide is reacted with hydrogen fluoride, it is converted to cerium fluoride having a low ultraviolet ray-shielding ability, whereby the ultraviolet ray-shielding ability of the second covering layer will be deteriorated.

Further, in a case where a resin other than a fluororesin is used as a resin binder, the mechanism for deterioration of the ultraviolet ray-shielding ability of the second covering layer by an acidic decomposed product, is as follows.
(V) In a case where the resin binder is an urethane resin, an acrylic resin or an acryl silicone resin, the weather resistance of such a resin itself is low, whereby, for example, an acidic decomposed product such as acrylic acid will be formed.
(VI) If titanium oxide not sufficiently covered, is present, an acidic decomposed product will be formed by decomposition of the resin binder by its photocatalysis.

If cerium oxide is reacted with the acidic decomposed product, it becomes a water-soluble cerium salt such as cerium chloride or cerium nitrate having a low ultraviolet ray-shielding ability, whereby it tends to easily elute into rain water, and the ultraviolet ray-shielding ability of the second covering layer will be deteriorated.

By the composite particles of the present invention, the third covering layer is provided to protect cerium oxide of the second covering layer, whereby deterioration of the ultraviolet ray-shielding ability of the second covering layer is prevented.

As described in the foregoing, in the composite particles in the present invention, by the second covering layer containing cerium oxide excellent in ultraviolet ray-shielding ability, the amount of ultraviolet rays that reach titanium oxide is reduced, whereby discoloration, decomposition and photocatalysis of titanium oxide by ultraviolet rays are prevented. Further, by the third covering layer containing silicon oxide having relatively high durability against hydrogen fluoride, deterioration of the ultraviolet ray-shielding ability of the cerium oxide by e.g. hydrogen fluoride is prevented. Further, by the first covering layer containing silicon oxide that is provided between the particle containing titanium oxide and the second covering layer, the adhesion between the particle containing titanium oxide and the second covering layer is improved. It is thereby possible to prevent falling off of the second covering layer and the third covering layer even in e.g. a roll kneading step or the dispersion step in the production of an ink wherein a large shearing force is exerted to the composite particles. As a result, the composite particles of the present invention are capable of constantly maintaining the ultraviolet ray-shielding ability by cerium oxide for a long period of time thereby to constantly prevent discoloration, decomposition and photocatalysis of titanium oxide for a long period of time.

Further, in the composite particles of the present invention, the second covering layer is covered by the third covering layer containing silicon oxide, whereby the yellow tint of cerium oxide is reduced. Thus, the inherent color of the particle containing titanium oxide used as a core, can be reproduced.

The effect of the provision of the first covering layer is obtainable particularly distinctly in a case where the composite particles of the present invention and another pigment are used in combination. Discoloration of the coating layer and the resin film by photocatalysis of titanium oxide works to change the color more white. Therefore, in the case of a white resin film having a coating layer formed by using the composite particles of the present invention alone, it is white from the beginning of its production, and accordingly, even if photocatalysis develops, discoloration may not be clearly recognized. However, for example, in a case where it is mixed with a black pigment (carbon black) to form a light gray colored coating layer, or in a case where it is mixed with a green pigment (NiCoZnTi oxide) to form a pale green coating layer, if the color changes to white by photocatalysis, such a color change is distinctly recognized. That is, when a weather resistance test is carried out in such a case, by using the composite particles of the present invention, the effect to prevent discoloration of the coating layer is distinctly observed.

A change up to a color difference ΔE* of about 3 may be allowable, but a change exceeding that level brings about a clearly different color, such being undesirable. In order to show particularly excellent weather resistance, the color difference ΔE* is preferably at most 1.

A printing ink and a coating material composition made of the composition for forming a coating layer of the present invention contain the composite particles of the present invention, whereby discoloration, decomposition and photocatalysis by ultraviolet rays can be constantly and highly prevented. Therefore, the printing ink and the coating material composition of the present invention are capable of constantly preventing discoloration, a change in the visible light reflectance or deterioration of the mechanical strength for a long period of time and capable of forming a coating layer excellent in the adhesion to the substrates.

The coated article of the present invention has the above coating layer, whereby discoloration of the coating layer, a change in the visible light reflectance, etc. can be constantly prevented for a long period of time. Particularly, in the case of a resin film having a coating layer of the present invention, it is possible to prevent not only the discoloration, peeling or a change in the visible light reflectance of the coating layer, but also discoloration of the resin film itself, a change in the visible light reflectance or deterioration of the mechanical strength constantly over a long period of time. Further, in the case of an outdoor article having a coating layer formed by the coating material composition, it is possible to constantly and highly prevent discoloration at the time of the outdoor exposure or deterioration of the gloss, and excellent weather resistance (particularly acidic rain resistance) durable against exposure to e.g. rain, snow, direct sunlight, etc. for a long period of time is also imparted.

### EXAMPLES

Now, the present invention will be described in detail with reference to Examples and Comparative Examples. However, it should be understood that the present invention is by no means restricted by the following description.

Examples 1 to 5 are working Examples of the present invention, Examples 6 to 13 are Comparative Examples, and Example 14 is a reference Example.

### CONTENTS OF TITANIUM OXIDE, CERIUM OXIDE AND SILICON OXIDE

The contents of titanium oxide, cerium oxide and silicon oxide in the composite particles were quantitatively analyzed by means of SEM-EDX integration system S-3400NX manufactured by Hitachi, Ltd.

### AVERAGE PARTICLE SIZE OF COMPOSITE PARTICLES

Obtained composite particles were put in isopropanol to bring the solid content concentration to about 0.1 mass%, whereupon, the composite particles were completely dispersed by ultrasonic waves. Then, they were dropped on a collodion membrane, dried and then subjected to a SEM observation by means of a scanning electron microscope (SEM-EDX integration system S-3400NX manufactured by Hitachi, Ltd.). An average value of diameters of twenty particles randomly selected in the obtained SEM image, was taken as the average particle size.

### VISIBLE LIGHT REFLECTANCE

The visible light reflectance of a resin film having a coating layer was measured in accordance with JIS R3106 "Test methods for transmittance/reflectance/emissivity/solar radiation heat acquisition rate of plate glasses" by means of a spectrophotometer (UV-3100PC manufactured by Shimadzu Corporation). The visible light reflectance was measured by applying light from the coating layer side in each case of top print exposure and back print exposure.

### ACCELERATED WEATHERING TESTS

An accelerated weathering test for 5,000 hours was carried out by means of a sunshine weather meter equipped with an open frame carbon arc lamp in accordance with JIS K7350-4 (300 sunshine weather meter, manufactured by Suga Test Instruments Co., Ltd.).

The accelerated weathering test was carried out with respect to top print exposure wherein light enters from the coating layer side and back print exposure wherein light enters from the resin film side. After the accelerated weathering test, the visible light reflectance of the resin film having a coating layer was measured. The change in the visible light reflectance of the resin film having a coating layer as between before and after the accelerated weathering test becomes an index for discoloration of the resin film having a coating layer.

### PEELING TEST

After the accelerated weathering test, an adhesive tape was bonded to the coating layer, and the adhesive tape was peeled, whereupon the state of the coating layer was visually observed and evaluated by the following standards.
○: Peeling of the coating layer not observed
×: Peeling of the coating layer observed

The presence or absence of the peeling of the coating layer becomes also an index for the mechanical strength of the resin film having a coating layer.

### COLOR DIFFERENCE

With respect to the color difference of the coating layer, the reflection colors (L*, a*, b*) were measured before and after the weathering test, and the color difference was obtained from such reflection colors. The method was in accordance with JIS Z8722, and the measurements were carried out by means of Spectrophotometer SC-T manufactured by Suga Test Instruments Co., Ltd.

### EXAMPLE 1

### PRODUCTION OF COMPOSITE PARTICLES:

A titanium oxide pigment (CR50 manufactured by Ishihara Sangyo Kaisha, Ltd., titanium oxide particles having an average particle size of 0.20 µm) and, as a dispersant, sodium pyrophosphate corresponding to 0.05 mass% as calculated as P₂O₅, were added to water, followed by preliminary pulverization by means of a sand mill to obtain an aqueous slurry having a titanium oxide concentration of 300 g/L. 0.4 L of this slurry was heated to 80°C with stirring, and while maintaining that temperature, an aqueous sodium silicate solution corresponding to 5 mass% as calculated as SiO₂ based on the titanium oxide particles, was added. Then, sulfuric acid (1 N) was added over a period of 60 minutes so that the pH became about 5, followed by aging with stirring for 60 minutes to form the first covering layer of dense water-containing silica. Thereafter, by means of a suction filter, washing and solid liquid separation were carried out to obtain a covering treatment product. The obtained covering treatment product was baked at 700°C over a period of one hour by means of an electric furnace to obtain a baked product (silicon oxide-covered particles).

By the fluorescent X-ray analysis, silica was 5 parts by mass per 100 parts by mass of titanium oxide.

The above baked product was put in water and subjected to wet-pulverization by means of a sand mill to redisperse the silicon oxide-covered particles thereby to obtain an aqueous slurry having a concentration of 300 g/L. While heating and stirring it at 80°C, an aqueous cerium nitrate solution (cerium content: 19 mass% as calculated as CeO₂) was dropwise added to the aqueous dispersion. To such an aqueous dispersion, a sodium hydroxide solution was added to neutralize the dispersion to pH 7 to 9 to let cerium hydroxide precipitate on the surface of the silica-covered titanium oxide to obtain cerium hydroxide-covered particles. The liquid containing the cerium hydroxide-covered particles was subjected to filtration, and the cerium hydroxide-covered particles were washed with water and dried. Agglomerates of the cerium hydroxide-covered particles were pulverized to obtain cerium hydroxide-covered particles.

The cerium hydroxide-covered particles were added to 10 L of pure water and dispersed for one hour by a disper mill to obtain an aqueous dispersion. While heating and stirring such an aqueous dispersion at 80°C, 348 g of No. 3 sodium silicate (silicon content: 28.5 mass% as calculated as SiO₂) was added to the aqueous dispersion. At that time, dilute sulfuric acid (a 2 N aqueous solution) was also added to maintain the pH of the liquid to be from 9 to 11, and stirring was further continued for one hour. Then, dilute sulfuric acid (a 2 N aqueous solution) was added to bring the pH of the liquid to be from 6 to 8 to form a third covering layer on the cerium hydroxide-covered particles thereby to obtain precursor particles.

The liquid containing the precursor particles was subjected to filtration, and the precursor particles were washed with water and dried. Agglomerates of the precursor particles were pulverized to obtain precursor particles.

The precursor particles were baked at 500°C for two hours, and agglomerates of particles were pulverized by a hammer mill to obtain composite particles having an average particle size of 0.25 µm.

The content of titanium oxide in the composite particles was 68.6 mass%, the content of cerium oxide was 10.0 mass%, and the content of silicon oxide was 21.4 mass%. From this result and the result of the above fluorescent X-ray analysis, in 100 mass% of the composite particles, titanium oxide was 68.6 mass%, silicon oxide in the first covering layer was 3.4 mass%, cerium oxide in the second covering layer was 10.0 mass%, and silicon oxide in the third covering layer was 18.0 mass%.

Thus, per 100 parts by mass of titanium oxide, silicon oxide in the first covering layer was 5.0 parts by mass, cerium oxide in the second covering layer was 14.6 parts by mass, and silicon oxide in the third covering layer was 26.2 parts by mass.

### PRODUCTION OF PRINTING INK:

To 100 g of a solution of a solvent soluble fluororesin being a resin binder (Lumiflon 916N manufactured by Asahi Glass Company, Limited, solid content: 65 mass%, solvent: xylene), 48.75 g of the above composite particles and 16.25 g of a green pigment (Green 223 manufactured by The Shepherd Color Company, CoNiZnTi oxide) were added and dispersed by a ball mill to obtain a greenish white liquid having a pigment concentration of 50 mass% in solid content. That is, the composition of the liquid was 65 g of the resin, 65 g of the composite particles and 35 g of the solvent, wherein the mass ratio of the composite particles, the green pigment and the fluororesin solid content was 75:25:100. Further, 80 g of a mixed solvent of toluene/methyl ethyl ketone = 50/50 (mass ratio) was added to adjust the viscosity thereby to obtain a printing ink. That is, when the total mass of the printing ink was taken as 100, the mass of the white composite particles was 6.75, the mass of the green pigment was 20.25, the mass of the fluororesin was 27, the mass of xylene was 14, the mass of toluene was 16 and the mass of methyl ethyl ketone was 16.

### PRODUCTION OF RESIN FILM HAVING COATING LAYER:

To an ETFE film having a thickness of 200 µm, corona discharge treatment was applied in air at a treatment density of 150 W·min/m². On the corona discharge treated surface of the ETFE film, the above printing ink was applied by a gravure printing method so that the thickness after drying could be 2 µm, and then the coating layer was dried at 100°C for 60 seconds to obtain a resin film having a coating layer.

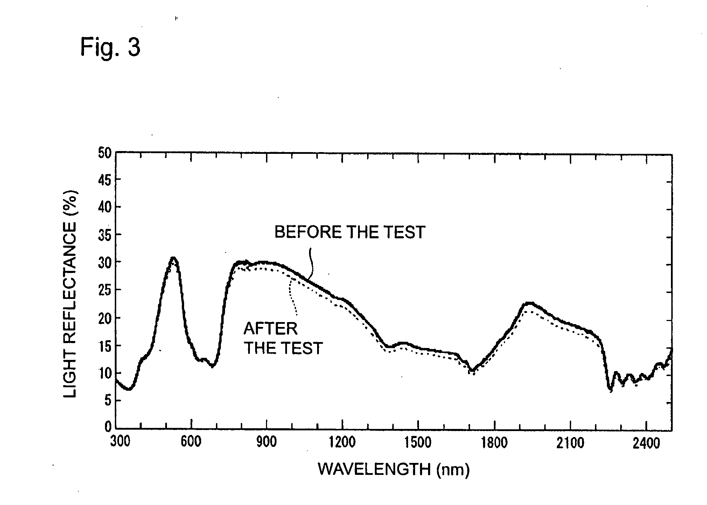

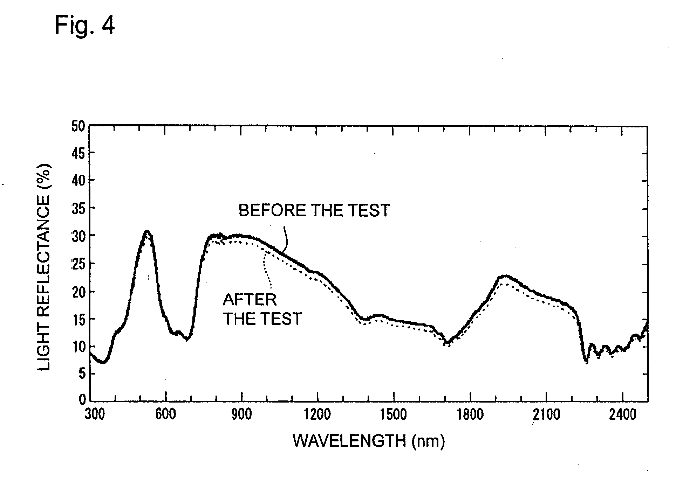

The visible light reflectance of the resin film having a coating layer was measured before and after the accelerated weathering test. The results are shown in Tables 2 and 3. Further, an optical chart of the resin film having a coating layer before and after the accelerated weathering test by top print exposure is shown in Fig. 3, and an optical chart of the resin film having a coating layer before and after the accelerated weathering test by back print exposure is shown in Fig. 4. Further, a peeling test was carried out. The results are shown in Tables 2 and 3.

### EXAMPLE 2

By changing the charged amounts of materials, in the same manner as in Example 1, composite particles shown in Table 1 were obtained. Then, a resin film having a coating layer was obtained in the same manner as in Example 1 except that a printing ink wherein the mass ratio of the composite particles, the green pigment and the fluororesin solid content was 95:5:100, and a corona discharge treated PET film of 50 µm instead of the ETFE film, were used. The thickness of the ink layer (coating layer) was adjusted depending upon the depth of the gravure printing block.

The visible light reflectance of the resin film having a coating layer was measured before and after the accelerated weathering test. The results are shown in Tables 2 and 3. Further, a color difference measurement of the reflected light and a peeling test were carried out. The results are shown in Tables 2 and 3.

### EXAMPLES 3 and 4

By changing the charged amounts of materials, in the same manner as in Example 1, composite particles shown in Table 1 were obtained. Then, a resin film having a coating layer was obtained in the same manner as in Example 1 except that using a printing ink wherein the mass ratio of the composite particles, the green pigment and the fluororesin solid content was 90:10:100, entire surface printing was repeated twice to bring the thickness of the coating layer to be 4 µm.

The visible light reflectance of the resin film having a coating layer was measured before and after the accelerated weathering test. The results are shown in Tables 2 and 3. Further, a color difference measurement of the reflected light and a peeling test were carried out. The results are shown in Tables 2 and 3.

### EXAMPLE 5

By changing the charged amounts of materials, in the same manner as in Example 1, composite particles shown in Table 1 were obtained. Further, in the same manner as in Example 1, a resin film having a coating layer was obtained.

The visible light reflectance of the resin film having a coating layer was measured before and after the accelerated weathering test. The results are shown in Tables 2 and 3. Further, a color difference measurement of the reflected light and a peeling test were carried out. The results are shown in Tables 2 and 3.

### EXAMPLES 6 to 9

By changing the charged amounts of materials, in the same manner as in Example 1, composite particles shown in Table 1 were obtained. Here, Example 6 is titanium oxide itself having no covering layer formed. Except that such composite particles were employed, in the same manner as in Example 1, a printing ink was produced, and a resin having a coating layer was obtained.

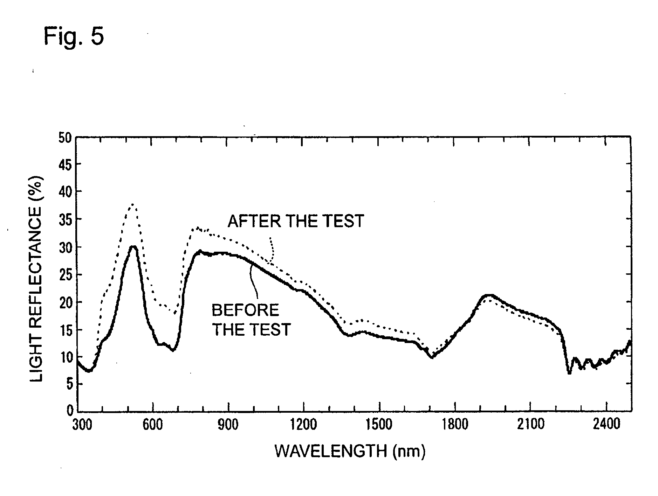

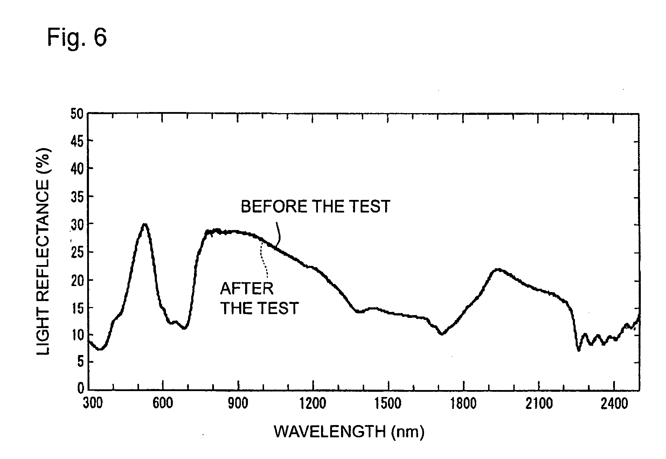

The visible light reflectance of the resin film having a coating layer was measured before and after the accelerated weathering test. The results are shown in Tables 2 and 3. Further, a color difference measurement of the reflected light and a peeling test were carried out. The results are shown in Tables 2 and 3. Further, an optical chart of the resin film having a coating layer before and after the accelerated weathering test by top print exposure in Example 7 is shown in Fig. 5, and an optical chart of the resin film having a coating layer before and after the accelerated weathering test by back print exposure is shown in Fig. 6.

### EXAMPLES 10 and 11

By changing the charged amounts of materials, in the same manner as in Example 1, composite particles shown in Table 1 were obtained. Except that such composite particles were employed, in the same mass ratio as in Example 2, a printing ink was produced, and in the same manner as in Example 1, a resin film having a coating layer was obtained.

The visible light reflectance of the resin film having a coating layer was measured before and after the accelerated weathering test. The results are shown in Tables 2 and 3. Further, a color difference measurement of the reflected light and a peeling test were carried out. The results are shown in Tables 2 and 3.

### EXAMPLE 12

By changing the charged amounts of materials, in the same manner as in Example 1, composite particles shown in Table 1 were obtained. Except that such composite particles were employed, in the same mass ratio as in Examples 3 and 4, the printing ink was produced, and in the same manner as in Example 1, a resin film having a coating layer was obtained.

The visible light reflectance of the resin film having a coating layer was measured before and after the accelerated weathering test. The results are shown in Tables 2 and 3. Further, a color difference measurement of the reflected light and a peeling test were carried out. The results are shown in Tables 2 and 3.

### EXAMPLE 13

By changing the charged amounts of materials, in the same manner as in Example 1, composite particles shown in Table 1 were obtained. Further, except that the thickness of the coating layer was 1 µm, in the same manner as in Example 1, a resin film having a coating layer was obtained. The thickness of the coating layer was adjusted depending upon the depth of gravure printing block.

The visible light reflectance of the resin film having a coating layer was measured before and after the accelerated weathering test. The results are shown in Tables 2 and 3. Further, a color difference measurement of the reflected light and a peeling test were carried out. The results are shown in Tables 2 and 3.

### EXAMPLE 14

A printing ink was produced and a resin film having a coating layer was obtained, in the same manner as in Example 1, except that without using composite particles, the amount of the green pigment was adjusted to the same 65 g as the total amount of the composite material and green pigment in Example 1.

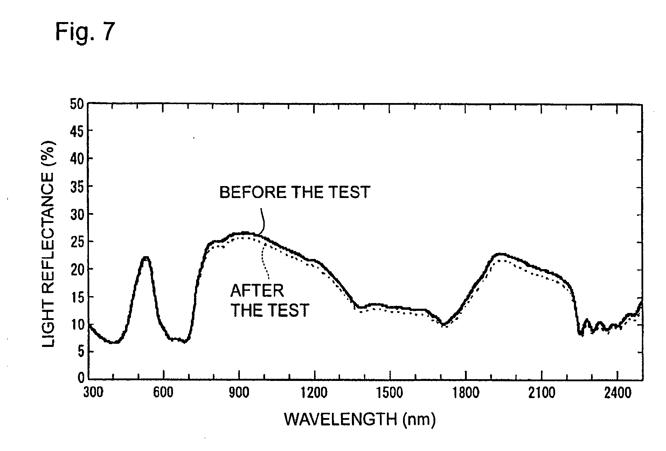

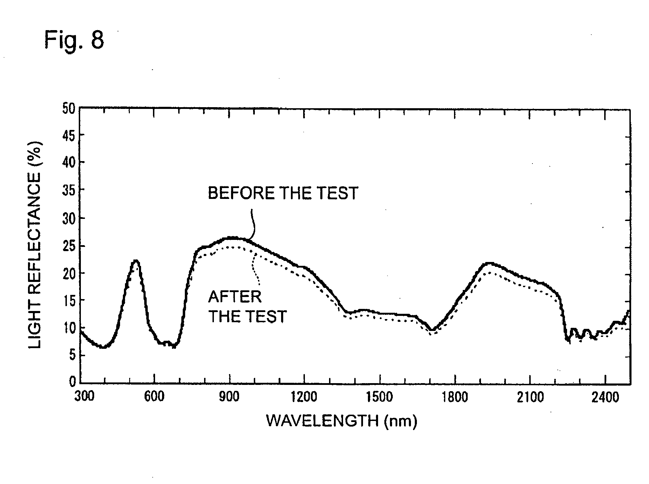

The visible light reflectance of the resin film having a coating layer was measured before and after the accelerated weathering test. The results are shown in Tables 2 and 3. Further, a color difference measurement of the reflected light and a peeling test were carried out. The results are shown in Tables 2 and 3. Further, an optical chart of the resin film having a coating layer before and after the accelerated weathering test by top print exposure is shown in Fig. 7, and an optical chart of the resin film having a coating layer before and after the accelerated weathering test by back print exposure is shown in Fig. 8.

In Table 1, Wa:Wb:Wc represent the mass ratio of the composite particles (mass: Wa), the green pigment (mass: Wb) and the fluororesin solid content (mass: Wc) in the coating layer. Further, "F" in the resin binder shows that a fluororesin binder was used as the resin binder.

**TABLE 1**

| | Composite particles | | | | | | | | | Resin film | Coating layer | | |
|---|---|---|---|---|---|---|---|---|---|---|---|---|---|
| | Mass% | | | | Parts by mass | | | | Average particle size (µm) | | Resin binder | Wa:Wb:Wc (mass ratio) | Thickness (µm) |
| | TiO₂ | (1) SiO₂ | (2) CeO₂ | (3) SiO₂ | TiO₂ | (1) SiO₂ | (2) CeO₂ | (3) SiO₂ | | | | | |
| Ex. 1 | 68.6 | 3.4 | 10.0 | 18.0 | 100 | 5.0 | 14.6 | 26.2 | 0.25 | ETFE | F | 75:25:100 | 2 |
| Ex. 2 | 75.8 | 1.2 | 5.0 | 10.0 | 100 | 1.6 | 6.6 | 13.2 | 0.25 | PET | F | 95:5:100 | 2 |
| Ex. 3 | 89.0 | 1.2 | 4.0 | 5.8 | 100 | 1.3 | 4.5 | 6.5 | 0.25 | ETFE | F | 90:10:100 | 4 |
| Ex. 4 | 79.0 | 8.0 | 2.5 | 8.0 | 100 | 10.1 | 3.2 | 10.1 | 0.20 | ETFE | F | 90:10:100 | 4 |
| Ex. 5 | 66.0 | 4.0 | 20.0 | 10.0 | 100 | 6.1 | 30.3 | 15.2 | 2.00 | ETFE | F | 75:25:100 | 1 |
| Ex. 6 | 100.0 | 0.0 | 0.0 | 0.0 | 100 | 0.0 | 0.0 | 0.0 | 0.22 | ETFE | F | 75:25:100 | 2 |
| Ex. 7 | 92.0 | 8.0 | 0.0 | 0.0 | 100 | 8.7 | 0.0 | 0.0 | 0.22 | ETFE | F | 75:25:100 | 2 |
| Ex. 8 | 96.0 | 4.0 | 0.0 | 0.0 | 100 | 4.2 | 0.0 | 0.0 | 0.24 | ETFE | F | 75:25:100 | 2 |
| Ex. 9 | 80.0 | 20.0 | 0.0 | 0.0 | 100 | 25.0 | 0.0 | 0.0 | 1.90 | ETFE | F | 75:25:100 | 2 |
| Ex. 10 | 72.0 | 0.0 | 10.0 | 18.0 | 100 | 0.0 | 13.9 | 25.0 | 0.23 | ETFE | F | 95:5:100 | 2 |
| Ex. 11 | 77.0 | 0.0 | 5.0 | 10.0 | 100 | 0.0 | 6.5 | 13.0 | 1.00 | ETFE | F | 95:5:100 | 2 |
| Ex. 12 | 90.2 | 0.0 | 4.0 | 5.8 | 100 | 0.0 | 4.4 | 6.4 | 0.22 | ETFE | F | 90:10:100 | 4 |
| Ex. 13 | 70.0 | 0.0 | 20.0 | 10.0 | 100 | 0.0 | 28.6 | 14.3 | 0.25 | ETFE | F | 75:25:100 | 1 |
| Ex. 14 | - | - | - | - | - | - | - | - | - | ETFE | F | 0:100:100 | 2 |

**TABLE 2**

| | Back print exposure | | | | | | |
|---|---|---|---|---|---|---|---|
| | Reflectance (%) | | | L*/a*/b* | | Color difference | Peeling |
| | Before test | After test | Difference | Before test | After test | | |
| Ex. 1 | 23.7 | 22.9 | -0.8 | 53.4/-27.9/10.9 | 54.3/-27.3/10.6 | 1.1 | ○ |
| Ex. 2 | 41.1 | 41.6 | 0.5 | 68.7/-18.1/5.4 | 69.1/-16.5/5.2 | 1.7 | ○ |
| Ex. 3 | 64.8 | 64.7 | -0.1 | 85.2/-18.2/8.2 | 86.0/-17.3/8.0 | 1.2 | ○ |
| Ex. 4 | 64.2 | 63.9 | -0.3 | 86.7/-17.2/7.4 | 87.01-15.0/7.0 | 2.3 | ○ |
| Ex. 5 | 11.5 | 11.9 | 0.4 | 42.5/-34.4/13.9 | 43.8/-33.0/12.2 | 2.6 | ○ |
| Ex. 6 | 23.9 | 25.1 | 1.2 | 52.9/-26.2/9.9 | 56.1/-25.9111.4 | 3.6 | × |
| Ex. 7 | 22.9 | 22.7 | -0.2 | 52.7/-26.3/10.0 | 54.3/-26.2/10.3 | 1.6 | × |
| Ex. 8 | 26.4 | 27.9 | 1.5 | 55.2/-28.6/10.4 | 57.9/-27.6/7.8 | 3.9 | × |
| Ex. 9 | 25.7 | 26.1 | 0.4 | 57.4/-24.4/9.7 | 58.9/-23.4/8.7 | 2.1 | × |
| Ex. 10 | 42.2 | 42.3 | 0.1 | 70.7/-17.1/5.5 | 71.3/-15.3/5.0 | 2.0 | ○ |
| Ex. 11 | 42.5 | 42.3 | -0.2 | 70.9/-17.5/5.6 | 72.2/-16.0/4.9 | 2.1 | ○ |
| Ex. 12 | 65.2 | 66.9 | 1.7 | 85.2/-16.2/8.2 | 86.1/-15.9/8.3 | 1.0 | ○ |
| Ex. 13 | 12.5 | 12.1 | -0.4 | 43.2/-33.5/13.8 | 44.0/-32.7/12.7 | 1.6 | ○ |
| Ex. 14 | 15.9 | 15.0 | -0.9 | 44.91-31.9/13.9 | 44.9/-30.4/13.1 | 1.7 | ○ |

**TABLE 3**

| | Top print exposure | | | | | | |
|---|---|---|---|---|---|---|---|
| | Reflectance (%) | | | L*/a*/b* | | Color difference | Peeling |
| | Before test | After test | Difference | Before test | After test | | |
| Ex. 1 | 23.5 | 23.1 | -0.4 | 55.6/-27.0/11.9 | 54.7/-26.8/11.7 | 0.9 | ○ |
| Ex. 2 | 40.9 | 40.5 | -0.4 | 70.1/-15.9/5.4 | 70.9/-15.4/5.4 | 0.9 | ○ |
| Ex. 3 | 65.2 | 65.3 | 0.1 | 86.4/-16.8/8.2 | 87.0/-16.4/7.9 | 0.8 | ○ |
| Ex. 4 | 63.9 | 64.2 | 0.3 | 87.1/-14.9/6.7 | 88.9/-13.9/5.7 | 2.3 | ○ |
| Ex. 5 | 12.4 | 12.8 | 0.4 | 43.8/-33.3/12.7 | 44.2/-31.9/10.8 | 2.4 | ○ |
| Ex. 6 | 24.1 | 34.1 | 10.0 | 54.6/-25.5/11.1 | 63.4/-19.2/5.0 | 12.4 | × |
| Ex. 7 | 22.7 | 31.1 | 8.4 | 52.9/-26.7/9.9 | 61.7/-21.2/6.0 | 11.1 | ○ |
| Ex. 8 | 27.1 | 28.9 | 1.8 | 56.7/-24.5/10.0 | 60.9/-21.0/7.9 | 5.9 | × |
| Ex. 9 | 27.9 | 28.7 | 0.8 | 58.71-22.1/8.0 | 63.1/-19.4/5.9 | 5.6 | ○ |
| Ex. 10 | 42.2 | 43.9 | 1.7 | 71.4/-15.7/5.1 | 74.5/-13.0/4.0 | 4.3 | ○ |
| Ex. 11 | 42.2 | 41.2 | -1.0 | 73.9/-14.8/4.9 | 77.4/-11.8/3.5 | 4.8 | ○ |
| Ex. 12 | 64.8 | 66.8 | 2.0 | 85.7/-17.8/8.2 | 89.1/-14.6/7.0 | 4.8 | ○ |
| Ex. 13 | 12.9 | 13.9 | 1.0 | 44.1/-32.4/11.9 | 47.9/-29.6/10.5 | 4.9 | ○ |
| Ex. 14 | 15.7 | 15.3 | -0.4 | 47.0/-29.3/14.1 | 46.9/-28.7/13.9 | 0.6 | ○ |

As shown in Tables 2 and 3, the change in the visible light reflectance in the resin film having a coating layer in Example 1, was -0.8% by back print exposure and -0.4% by top print exposure. Further, the reflection color difference was 1.1 by back print exposure and 0.9 by top print exposure. As compared with back print exposure, in top print exposure, light impinges directly on the coating layer, whereby the color and the visible light reflectance are more likely to change (see e.g. Example 6 wherein titanium particles having no covering layer were used). When the composite particles of the present invention were used, there was no substantial change in the color and the visible light reflectance as between before and after the accelerated weathering test even by top print exposure. Thus, the composite particles of the present invention were able to sufficiently prevent, despite containing titanium oxide, its photocatalysis, and were able to suppress changes in the visible light reflectance and the color within the ranges substantially equal to Example 14 wherein only the green pigment was employed. Further, with the resin film having a coating layer in Example 1, no peeling of the coating layer was observed, and the adhesion of the coating layer was good even by back print exposure where peeling of the coating layer is likely to take place (see e.g. Examples 7 and 9 where ones having no second and third covering layers were provided).

Likewise with the resin film having a coating layer in each of Examples 2 to 5, the change in the visible light reflectance was small, the color difference was also less than 3 i.e. showing no substantial change, and the photocatalysis of titanium oxide was constantly prevented. Further, the adhesion of the coating layer was good. Further, with the resin film having a coating layer in each of Examples 3 and 4, in spite of the fact that the composite particles were used in a smaller amount than the resin film having a coating layer in Example 2, the visible light reflectance of the coating layer increased. This is attributable to the fact that the thickness of the coating layer in Examples 3 and 4 is as thick as 4 µm, whereby the transmitted light is less and the reflected light is more than the coating layer in Example 2.

On the other hand, with the resin film having a coating layer in Example 6 wherein titanium oxide was used without providing any covering layer, the change in the visible light reflectance in top print exposure was large (10.0%), and it was clearly observed that the color changed to white (color difference: 12.4). Further, also in top print exposure, or in back print exposure, peeling of the coating layer was observed.

With the resin film having a coating layer in each of Examples 7 to 9 wherein composite particles having no second and third covering layers were employed, the change in the visible light reflectance in top print exposure was large, and the color difference exceeded 5 thus showing a large change. Further, in Examples 7 to 9, in back print exposure, peeling of the coating layer was observed, and in Example 8, also in top print exposure, peeling of the coating layer was observed.

With the resin film having a coating layer in each of Examples 10 and 11 having no first covering layer, although no peeling of the coating layer was observed, the changes in the visible light reflectance and the color in top print exposure were large, and the photocatalysis of titanium oxide was not sufficiently prevented.

Likewise, with the resin film having a coating layer in Example 12 having no first covering layer, as compared with Example 3 employing particles having equivalent second and third covering layers, the changes in the visible light reflectance and the color in top print exposure were large, and the photocatalysis of titanium oxide was not sufficiently prevented.

Further, with the resin film having a coating layer in Example 13 having no first covering layer, as compared with Example 5 employing particles having equivalent second and third covering layers, the changes in the visible light reflectance and the color in top print exposure were large, and the photocatalysis of titanium oxide was not sufficiently prevented.

As described in the foregoing, with the resin film having a coating layer wherein the composite particles of the present invention were used, by the provision of the first covering layer, falling off of the second and third covering layers was prevented, and discoloration, decomposition and photocatalysis of titanium oxide were constantly and highly prevented.

### INDUSTRIAL APPLICABILITY

The composite particles of the present invention are useful as a pigment for a composition for forming a coating layer containing a fluororesin (a printing ink or a coating material composition). The printing ink of the present invention is useful as an ink to form a coating layer on a resin film containing a fluororesin. The resin film having a coating layer of the present invention is useful as e.g. a roof material, a wall material, etc. of buildings or structures such as outdoor exhibition sites, sports facilities, agricultural houses, etc. Further, the coating material composition of the present invention is useful as a coating material to form a coating layer on the surface of an article. The coated article of the present invention is useful as e.g. a transportation equipment, a building material, a road material, a plant installation, an agricultural installation, a communication installation, an electric instrument, etc.

### REFERENCE SYMBOLS

10: resin film having a coating layer, 12: resin film, 14: coating film

## Claims

1. Composite particles **characterized in that** each of them comprises, in order from the inside, a particle containing titanium oxide, a first covering layer containing silicon oxide, a second covering layer containing cerium oxide and a third covering layer containing silicon oxide, and their average particle size is from 0.15 to 3 µm, wherein per 100 parts by mass of the titanium oxide, the silicon oxide in the first covering layer is from 0.5 to 15 parts by mass, the cerium oxide in the second covering layer is from 3 to 35 parts by mass, and the silicon oxide in the third covering layer is from 5 to 60 parts by mass.

2. A composition for forming a coating layer, which comprises the composite particles as defined in Claim 1, a resin and a liquid medium.

3. The composition for forming a coating layer according to Claim 2, wherein the resin is a fluororesin.

4. A printing ink made of the composition for forming a coating layer as defined in Claim 2 or 3.

5. A coating material composition made of the composition for forming a coating layer as defined in Claim 2 or 3.

6. A coated article having a coating layer formed from the composition for forming a coating layer as defined in Claim 2 or 3.

7. A resin film having a coating layer, which comprises a resin film and a coating layer formed from the composition for forming a coating layer as defined in Claim 2 or 3, on at least one side of the resin film.

8. The resin film having a coating layer according to Claim 7, wherein the coating layer is a coating layer formed by a printing method.

9. The resin film having a coating layer according to Claim 7 or 8, wherein the resin film is a fluororesin film.

10. The resin film having a coating layer according to any one of Claims 7 to 9, which has a visible light reflectance of from 5 to 75% as measured in accordance with JIS R3106.

## Patentansprüche

1. Verbundteilchen, **dadurch gekennzeichnet, dass** jedes davon, in einer Reihenfolge von innen, ein titanoxidhaltiges Teilchen, eine siliciumoxidhaltige erste Deckschicht, eine ceroxidhaltige zweite Deckschicht und eine siliciumoxidhaltige dritte Deckschicht umfasst, und ihre mittlere Teilchengröße von 0,15 bis 3 µm beträgt,
wobei, pro 100 Massenteile des Titanoxids, das Siliciumoxid in der ersten Deckschicht 0,5 bis 15 Massenteile beträgt, das Ceroxid in der zweiten Deckschicht 3 bis 35 Massenteile beträgt und das Siliciumoxid in der dritten Deckschicht 5 bis 60 Massenteile beträgt.

2. Zusammensetzung zum Bilden einer Beschichtungsschicht, welche die Verbundteilchen nach Anspruch 1, ein Harz und ein flüssiges Medium umfasst.

3. Zusammensetzung zum Bilden einer Beschichtungsschicht nach Anspruch 2, wobei das Harz ein Fluorharz ist.

4. Druckertinte, hergestellt aus der Zusammensetzung zum Bilden einer Beschichtungsschicht nach Anspruch 2 oder 3.

5. Beschichtungsmaterialzusammensetzung, hergestellt aus der Zusammensetzung zum Bilden einer Beschichtungsschicht nach Anspruch 2 oder 3.

6. Beschichteter Gegenstand mit einer Beschichtungsschicht, die aus der Zusammensetzung zum Bilden einer Beschichtungsschicht nach Anspruch 2 oder 3 gebildet ist.

7. Harzfolie mit einer Beschichtungsschicht, welche eine Harzfolie und eine Beschichtungsschicht, gebildet aus der Zusammensetzung zum Bilden einer Beschichtungsschicht nach Anspruch 2 oder 3, auf mindestens einer Seite der Harzfolie umfasst.

8. Harzfolie mit einer Beschichtungsschicht nach Anspruch 7, wobei die Beschichtungsschicht eine durch ein Druckverfahren gebildete Beschichtungsschicht ist.

9. Harzfolie mit einer Beschichtungsschicht nach Anspruch 7 oder 8, wobei die Harzfolie eine Fluorharzfolie ist.

10. Harzfolie mit einer Beschichtungsschicht nach einem der Ansprüche 7 bis 9, welche ein Reflexionsvermögen für sichtbares Licht von 5 bis 75%, gemessen gemäß JIS R3106, aufweist.

## Revendications

1. Particules composites, **caractérisées en ce que** chacune d'elles comprend, dans l'ordre en partant de l'intérieur, une particule contenant de l'oxyde de titane, une première couche de revêtement contenant de l'oxyde de silicium, une deuxième couche de revêtement contenant de l'oxyde de cérium, et une troisième couche de revêtement contenant de l'oxyde de silicium, et **en ce que** leur granulométrie moyenne est de 0,15 à 3 µm, dans lesquelles, pour 100 parties en masse de l'oxyde de titane, l'oxyde de silicium dans la première couche de revêtement est présent à raison de 0,5 à 15 parties en masse, l'oxyde de cérium dans la deuxième couche de revêtement est présent à raison de 3 à 35 parties en masse, et l'oxyde de silicium dans la troisième couche de revêtement est présent à raison de 5 à 60 parties en masse.

2. Composition pour former une couche de revêtement, qui comprend les particules composites telles que définies dans la revendication 1, une résine, et un milieu liquide.

3. Composition pour former une couche de revêtement selon la revendication 2, dans laquelle la résine est une résine fluorée.

4. Encre d'impression faite de la composition pour former une couche de revêtement telle que définie dans la revendication 2 ou 3.

5. Composition de matériau de revêtement faite de la composition pour former une couche de revêtement telle que définie dans la revendication 2 ou 3.

6. Article revêtu ayant une couche de revêtement formée par la composition pour former une couche de revêtement telle que définie dans la revendication 2 ou 3.

7. Film de résine ayant une couche de revêtement, qui comprend un film de résine, et une couche de revêtement, formée par la composition pour former une couche de revêtement telle que définie dans la revendication 2 ou 3, sur au moins un côté du film de résine.

8. Film de résine ayant une couche de revêtement selon la revendication 7, dans lequel la couche de revêtement est une couche de revêtement formée par un procédé d'impression.

9. Film de résine ayant une couche de revêtement selon la revendication 7 ou 8, dans lequel le film de résine est un film de résine fluorée.

10. Film de résine ayant une couche de revêtement selon l'une quelconque des revendications 7 à 9, qui a un coefficient de réflexion de la lumière visible, tel que mesuré conformément à la norme JIS R3106, de 5 à 75 %.
